# EUROPEAN PATENT APPLICATION

(11) **EP 1 437 663 A2**
(43) Date of publication of application: **14.07.2004**
(21) Application number: 03253267.3
(22) Date of filing: 23.05.2003
(51) Int. Cl.: G06F 17/30

(54) **Document composition system and method**

(30) Priority: 10.01.2003 US 340428
(71) Applicant: Metavante Corporation, Milwaukee, Wisconsin 53223-9004 (US)
(72) Inventor: Gottsacker, Neal F, Cedarbourg, WO 53012 (US); Schmidt, Alan A, Menomonee Falls, WI 53051 (US)
(74) Representative: Neobard, William John

(57) **Abstract**

A method and system for cross-organizational targeted document creation is disclosed which provides a tool for cross-organizational targeted document creation. The document composition system is implemented based on multi-layer architecture, and provides a configuration management component adapted to control user access to the available functionalities. The document composition system further comprises a collaboration support attribute and workflow functions adapted for project collaboration, and provides practical advantages such as a thin client application. The document composition system uses a platform-independent transfer mechanism and provides check image statement capabilities.

## Description

### BACKGROUND OF THE INVENTION

Field of the Invention. The present invention relates generally to document composition solution and Internet enablement of the document creation process, and more particularly to the systems and related methods for creating and delivering a plurality of outbound customer communications (such as bills, statements, letters, notices, policies, direct mail campaigns, booklets, brochures, etc.) regardless of end delivery point (via paper, electronic transmission, archive, etc.).

Millions of customized documents are generated each year by insurance, banking, finance, government, and other organizations. Personalized letters, contracts, policies, and forms are essential. Corporations need to develop documents (outbound customer communications) for marketing, information dissemination, revenue generation, and other business reasons. These documents are often generic in nature and are not tailored to provide personalized information for each individual customer.

Throughout the organization, each department (marketing, billing, etc.) often has a unique process for creating the customer-focused documents pertinent to their aspect of the business. Each group develops and distributes these documents independently, leading to increased mailing costs, customer overload (multiple mailings from the same company), customer confusion, high internal costs (both personnel cost and the cost of a corporation purchasing multiple software solutions), and overall internal inefficiencies.

Moreover, well-crafted and timely personal correspondence remains the most important form of business communication. As the volume of personalized documents increases, both the costs and the errors skyrocket. The more documents a corporation produces, the greater the possibility of errors. When volume increases, costs go up exponentially. These costs stem not only from the direct labour cost, but are also due to error, redundancy, slow response times, regulatory compliance failure, and other problems which may damage business and customer relationships.

In addition, coping with ever higher volumes of personalized letters, statements, policies, and e-mail can be extremely expensive without the right technology. The right technology can help companies save employee time and resources spent correcting errors, and can produce accurate documents in high volumes at high speed. The right technology can also help companies increase employee productivity because intelligent software links data to text, graphics, logos, and signatures, automating correspondence and saving considerable time over cut-and-paste methods. Customization using cut and paste methods builds errors into the documents regardless of how competent the staff is.

Rapid response time is vital to today's businesses. Studies show that customers are more than twice as likely to buy within 24 hours of an inquiry than after this 24 hour period. When customers have to wait, they generally lose interest. Businesses can't afford the time it takes to produce correspondence manually. Along with accuracy, quality and detail, there remains a need for high volume personalized communications to allow companies to take advantage of rapid delivery technologies such as e-mail, fax, the worldwide web, wireless communication, and electronic messaging. Rapid composition and generation of accurate, personalized responses to customers before they lose interest will help to increase sales and build customer loyalty.

Current document composition tools are designed for the creation of very specific document types. For example, some tools were built to generate letters, others to generate recurring transaction oriented documents such as bills or statements, and others to generate direct mail campaigns or marketing brochures. In addition, many existing document composition solutions are file-based applications. While previous solutions fit a specific niche within a corporate communication strategy, there is a need for a tool that can deliver all the documents encompassing the corporate communication strategy.

Throughout a company, different departments often use different platforms and systems to produce different kinds of documents. Some departments work in a Windows environment; others use mainframe technology. Some departments produce highly complex letters in lower volume; others produce contracts and forms in higher volume. The Internet has defined a whole new paradigm for information access and interactivity.

Therefore, there remains a need to provide a single cost-effective tool that can be utilized by all departments within an organization to generate outbound documents - essentially a single document composition tool for cross-organizational targeted document creation. A document composition tool will help companies to rationalize their documents (bills, statements, invoices, flyers, booklets, etc.), for example, by reducing the number of pages and the amount of ink used, which is accomplished by consolidating several communications into a single communication. With a single tool in place for all outbound customer communications, companies will be able to decrease mailing costs by consolidating all documents for each customer into one mailing. Companies will also provide a more focused communications effort for each customer while reducing costs associated with volume communications. These and other advantages can help companies realize internal efficiencies in the document creation process.

With regard to cost savings, financial institutions, such as banks, require a cross-functional, cost-effective tool to produce check image statements by directly interfacing with image archives without using additional check imaging products. Increasingly, financial institutions are offering their customers check image statement. With the rising costs of postage, it is cheaper to send neatly imaged checks back to customers than to send them the more bulky cancelled checks. Hence, the cross-functional document creation tool must have check imaging capabilities.

There is also a need for a database structure to store and support all objects that are necessary to build all outbound communications.

It is accordingly the primary objective of the present invention to provide a document composition system and related method of operation which will allow corporations to create and deliver all their outbound communications regardless of the end delivery point. It is yet another objective of the present invention to provide a document composition system and method that will allow users at all skill levels to be involved in the document creation process. It is yet another objective of the present invention to allow users to securely access and share common components of their document design.

It is a further objective of the present invention to provide an environment wherein user(s) can review and approve other user's work. It is yet another objective of the present invention to provide a document composition system and related method of operation that provides a multi-layered architecture design which permits rapid, bug-free changes and which facilitates maintenance and improvements. It is a still further an objective of the present invention to provide a document composition system and method with a check imaging solution that can directly interface with image archives. Finally, it is also an objective that all of the aforesaid advantages and objectives be achieved without incurring any substantial relative disadvantage.

### SUMMARY OF THE INVENTION

The disadvantages and limitations of the background art discussed above are overcome by the present invention. With this invention, the document composition process is improved by providing a tool for cross-organizational targeted document creation which addresses market needs, including, but not limited to: 1. ease of use; 2. allowing document component reuse; 3. facilitating project collaboration; 4. enhancing time to market; 5. providing broader application usage; and 6. including architectural advancements.

In a preferred embodiment, the present invention provides a document composition system for creating and delivering communications. The document composition system includes four components: 1. a graphical user interface ("GUI") which is adapted to allow a plurality of users to define design components required to create and design communications; 2. a centralized database which is adapted to allow use and re-use of the design components, with the centralized database being accessible by a plurality of users through access to shared components; 3. a processing engine which is adapted to allow the acquisition and merger of data from a plurality of records systems and the centralized database; and 4. a configuration management component which is adapted to control user access to functions available through the graphical user interface, with the configuration management functions being adapted to allow selective access to the functions on the graphical user interface.

In an alternate embodiment, the configuration management component may assign permission to users by the use of "skins" or "shells," thereby allowing system administrators to customize the appearance of the GUI. The customization of the GUI may be based on user preferences stored in a user profile and/or in a group profile. Expanded capabilities and greater control over configuration management addresses the market need for ease of use.

In the preferred embodiment of the document composition system of the present invention, users of all skill levels are allowed to be involved in the document creation process. This is accomplished by enabling the customization of the front-end GUI to cater to the specific job, role, function, and desire of the end user. The GUI provides a simple interface for non-technical users as well as a more comprehensive interface for highly skilled technical users by using skin/shell technology. For example, if a user has no need to know about the data layout behind the customer document, access to the data portion of the solution will not be made available to that user. In addition, the manner in which an individual uses the product may be used to determine the way the product will look to that user.

In an embellishment, the document composition system further includes a collaboration support functionality specifically adapted to allow project collaboration, which may be facilitated by local area networks ("LAN's"), wide area networks ("WAN's"), or web technology (e.g., the Internet). With the customer's document residing in a collaborative project environment, there may optionally be a requirement for users to review and approve the work of other users. The document composition system operates to enable users to access, review, and approve the collaborative work from anywhere.

The collaboration support also allows users from a plurality of entities to build a support community to share design components with other community members. Clients may also be allowed to build their own support communities (either internally or in conjunction with other companies). Collaborative customer support capabilities empower customers to provide up-to-date versions of the product to all of their distributed end users, to deliver round the clock support tools and product information which are centralized and unified, with ease of operation built into the product itself.

Workflow features of the document composition system of the present invention provide levels of approval to the distributed, collaborative environment. Documents may not be delivered to customers until they are completed within the collaborative work environment. This allows at least one user to access, review, and approve communications before they are sent out to customers. Web based design provides the ultimate collaborative work environment, since any user with web access may securely contribute to (and/or review) the solution.

The document composition system of the present invention also provides a tracking functionality adapted to monitor the activities of the user which creates a layout for the graphical user interface based on the monitored activities.

In another embodiment, the processing engine of the present invention is adapted to access and interrogate at least one external device to determine what resources are available and to reference or embed resources based on the availability of resources from the external device.

Moreover, the document composition system of the present invention provides practical advantages such as thin client functions, which allow a plurality of users to access application code remotely. Time to market is enhanced by such a solution deployment. With a thin client, users have a front end on their workstation (either LAN, WAN, or Web based), but access identical application code. Product upgrades and fixes are instantly available in a thin client environment, whereas in a thick client environment time is required to upgrade the solution on every machine the software is installed on.

Another advantage of the document composition system of the present invention is the implementation of a platform-independent transfer mechanism, which may be Extensible Markup Language ("XML"), a universal format used for structured documents and data on the Internet. The use of XML as a transfer mechanism between the GUI and the batch portion of the present invention provides customers with an industry standard file format for all of their documents. The XML format provides efficiencies because it is easier for customers to edit and debug, and because XML is an industry standard, integration with third party software is seamless. Also, the creation of real-time, on-demand documents with XML enhances the relationship a company has with its clients by allowing them to provide up to the minute documents and account status information.

The document composition system of the present invention further provides check imaging, which allows the ability to natively generate check images in Portable Document Format ("PDF") format to reduce processing costs and rework, and it eliminates the need for physical storage of cancelled checks. The check imaging of the present invention provides images of all the checks customers write, and allows the creation of easier-to-read statements. Other benefits of the present invention include savings on postage costs, faster access to archived check images, and increased personnel efficiency. Check imaging also facilitate record keeping and provides money management aids for consumers.

Another feature of the present invention is that it has a powerful engine which creates outputs for electronic document delivery, such as for electronic bill presentment and/or payment applications. The present invention may be implemented to provide nightly batch runs which may be used to create the majority of customer-specific documents. The present invention allows a worker to generate a document remotely upon request, thereby further enhancing customer support and relationships.

In the preferred embodiment, the document composition system of the present invention is implemented based on a multi-layer architecture. One of the advantages of the multi-layer approach is that it permits very rapid, bug-free changes to the code to be made. Another advantage of the multi-layer architecture is that it facilitates maintenance and the implementation of further improvements to the document composition system. The multi-layer architecture also facilitates such functions as distributed programming, thin client deployment, and customer service. For example, a customer support functionality may be adapted to grant access to a presentation layer and an application layer, or even a database layer if desired for the purpose of providing customer services and support.

The document composition system provides: 1. a multi-layer architectural design, consisting of a presentation layer which includes a graphical user interface adapted to allow a plurality of users to define design components required to create and design documents for communications; 2. a database layer which includes a centralized database adapted to allow use and re-use of the design components, the centralized database being accessible by users to allow components to be accessed and shared; 3. an application layer which includes rules for defining the presentation layer, the application layer being optimized to map data from a plurality of records systems and from the centralized database; and 4. a customer support function adapted to grant access to the presentation layer and the application layer.

The document component reuse advantage describes the ability of the document composition system to enable clients to securely access and share common components of their document design and maintenance (such as conditions or rules, mathematical procedures, data definitions, graphics, fields, document sections, etc.). This design characteristic allows clients to reuse document components that typically take significant investments of time to create and test. The security in place ensures that only approved users will be granted access to the system. Direct interfaces to existing security processes streamline the installation process and allow each corporation to dictate its own security parameters.

Time-to-Market, the time it takes for a customer to bring new or revised documents into production, is another advantage provided by the document composition system of the present invention. All of the components listed above directly impact productivity and time to market. The document composition system has architecture which makes the process of creating outbound customer communication both easier and faster.

The document composition system of the present invention also provides broader application usage. The document composition tool of the present invention is designed for high volume, data intensive, recurring documents such as statements, bills, and the like, and also for processing text based on lower volume documents such as letters and brochures. Traditional document composition tools have been targeted at the largest corporations. The document composition system of the present invention, due to the factors discussed above and herein, is a solution for organizations of any size: small, medium, or large.

The embodiments described herein provides architectural advancements, featuring such advancements as: 1. the implementation of a thin client application; 2. The use of a database repository which allows for permissions to be assigned for exposing functionality and which provides true object reuse and collaborative development environments; 3. the use of XML as the transfer mechanism from GUI front end to batch engine; 4. the creation of real-time on-demand documents; and 5. the ability to natively generate PDF check image statements.

In summary, the document composition system of the present invention delivers the following customer value advantages: 1. a reduction in the number of skilled IT personnel needed to run a project; 2. a reduction in the skill level required of users, thus reducing overall cost of operation; 3. an improved level of development productivity through the addition of reusable features; 4. an improved speed to market; 5. deployment options to meet each individual corporate environment; 6. the ability to deploy across multiple applications (i.e. brochures, letters, etc), thus avoiding the requirement for additional investment; and 7. enhanced advertisement and marketing capabilities.

It may therefore be seen that the document composition system of the present invention provides a system and method for cross-organizational targeted document creation. The system and method may be utilized by all departments within an organization to generate outbound documents or communications. The present invention will enable companies to decrease mailing costs by consolidating all documents for each customer in a single mailing, provide a more focused communications effort, reduce costs, and realize internal efficiencies in the document creation process. The present invention thereby provides the creation of real-time, on-demand documents that enhance the relationship a company has with its clients by providing up to the minute documents and account status information. Finally, all of the aforesaid advantages and objectives are achieved without incurring any substantial relative disadvantage.

### DESCRIPTION OF THE DRAWINGS

These and other advantages of the present invention are best understood with reference to the drawings, in which:

Fig. 1 is a simplified schematic block diagram illustrating a document composition system having multi-layer architecture as taught by the present invention;

Fig. 2 is a schematic block diagram illustrating the system architecture of the document composition system illustrated in Fig. 1;

Fig. 3 is a schematic block diagram illustrating the permission-based access functionality of the document composition system wherein permissions may be assigned for allowing user access to the various functions;

Fig. 4 is a screenshot demonstrating the log-in feature of the document composition system;

Fig. 5 is a schematic block diagram illustrating the interaction of several elements illustrated in Fig. 2 when permission access functionality is implemented;

Fig. 6 is a screenshot showing the user properties dialog box of the document composition system;

Fig. 7 is a screenshot showing the role properties dialog box of the document composition system;

Fig. 8 is a screenshot showing the policy properties dialog box of the document composition system;

Fig. 9 is a schematic block diagram illustrating the implementation of a thin client feature in which end users access identical application code residing on an application server;

Fig. 10 is a schematic block diagram illustrating a transfer mechanism using XML to internally and externally communicate with the document composition system illustrated in Fig. 2, including third party applications and batch applications;

Fig. 11 is a schematic block diagram of the web services feature of the document composition system which shows how a calling program interacts with resources available on a distributed network;

Fig. 12 is a schematic block diagram illustrating an intelligent resource engine used by the document composition system;

Fig. 13 is a process flowchart illustrating a PDF check imaging process of the document composition system;

Fig. 14 is a screenshot showing a main splash screen used by the document composition system;

Fig. 15 is a screenshot showing a graphical interface used by the document composition system;

Fig. 16 is a screenshot showing a pop-up screen used by the interface of the data view tab when the data view tab is selected;

Fig. 17 is a screenshot showing the interface of the document composition system in document view with a data hierarchy;

Fig. 18 is a screenshot demonstrating a change to the data hierarchy;

Fig. 19 is a screenshot showing a document view with an Images Toolbox;

Fig. 20 is a screenshot demonstrating the docketing of Records Field Toolbox;

Fig. 21 is a screenshot demonstrating the drag and drop feature of the document composition system;

Fig. 22 is a screenshot showing a sample document;

Fig. 23 is a screenshot showing the document illustrated in Fig. 22 being highlighted for copying;

Fig. 24 is a screenshot showing the copied document illustrated in Fig. 22 being pasted onto the interface of the document composition system;

Fig. 25 is a screenshot in which a data field has been inserted to the document copied to the interface in Fig. 24;

Fig. 26 is a screenshot in which three more variable fields have been inserted to the document illustrated in Fig. 25;

Fig. 27 is a screenshot showing the replacement of a group of text from the document illustrated in Fig. 26 with a data field;

Fig. 28 is a screenshot demonstrating signature insertion into the document illustrated in Fog. 27;

Fig. 29 is a screenshot showing the configuration of the document composition system to create a new document;

Fig. 30 is a screenshot showing a drop-down formatting toolbox;

Fig. 31 is a screenshot showing an PDF view of a document;

Fig. 32 is a screenshot showing a pop-up screen which is brought forth when conditional formatting is selected;

Fig. 33 is a screenshot showing a highlighted portion of a text in which a condition has been placed;

Fig. 34 is a screenshot showing the insertion of a table into the document; and

Fig. 35 is a screenshot showing how a variable data field can be added to the table of Fig. 30.

### DETAILED DESCRIPTION OF THE PREFERRED EMBODIMENT

The preferred embodiment of the document composition system of the present invention provides a cost-effective tool for cross-organizational targeted document creation. In the preferred embodiment, the tool may be utilized by all departments within an organization to generate outbound documents at low or high volumes, in real-time or in batch run. In one embodiment, the document composition system is implemented based on a multi-layer architecture to permit rapid code changes and to facilitate maintenance and improvements. Other embodiments of the document composition system of the present invention which will become apparent include enhanced capabilities such as a configuration management component, workflow functions, a collaborative work environment, an intelligent engine, thin client application, web services, and check imaging.

### Overview of the System

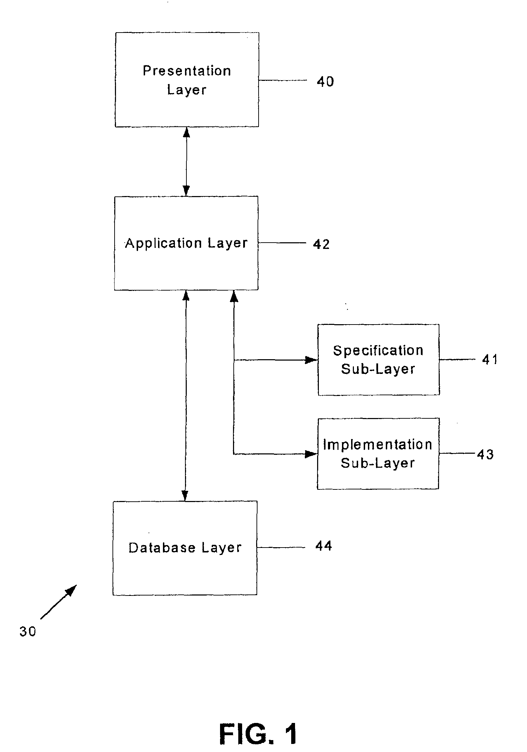

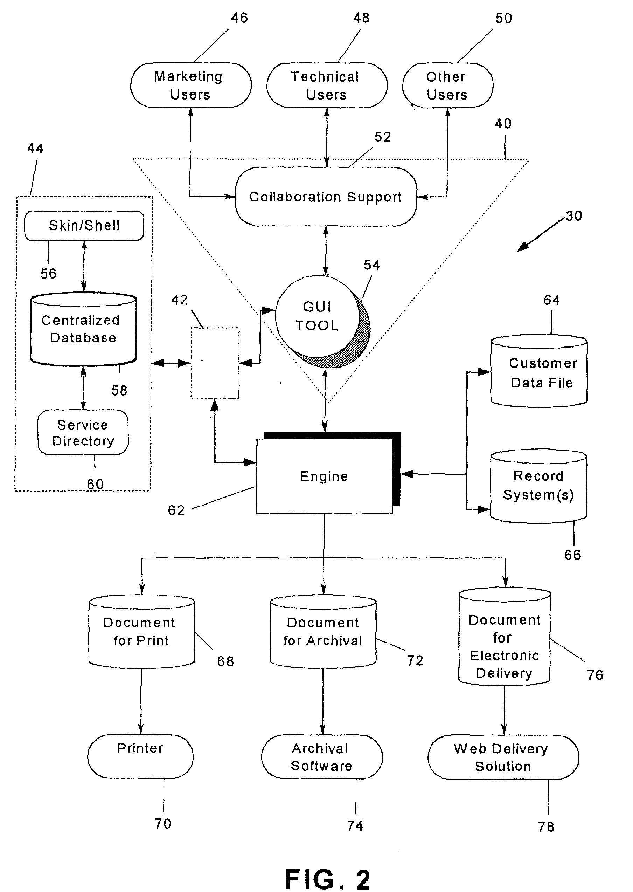

Figs. 1 and 2 illustrate a multi-tier or multi-layer approach, and depict a document composition system 30 constructed according to the present invention. The document composition system 30 consists of a presentation layer 40, an application layer 42, and a database layer 44. The application layer 42 is interposed between the presentation layer 40 and the database layer 44. As will be seen, the presentation layer 40, the application layer 42, and the database layer 44 facilitate such functions as distributed programming, thin client deployment, and customer service.

The presentation layer 40 ensures that the communications, instructions, and data processed and/or passing through the application layer 42 from the database layer 44 are presented in the appropriate form on a graphical user interface ("GUI") for the user. The presentation layer 40 represents the "face" of the document composition system 30 and provides an access point to the document composition system 30. The presentation layer 40 provides an intuitive interface tool and offers maximum usability while ensuring that vital information is presented and entered correctly and expediently.

The application layer 42, which is the most critical layer, encapsulates the intelligence of the document composition system 30. Program functionalities, data delivery and processing, and enterprise application integration, to name a few, are all functions of the application layer 42. The application layer 42 contains business rules for defining processing between the layers 40 and 44. The application layer 42 of the document composition system 30 is a robust business layer designed for functionality, scalability and the overall longevity of the document composition system 30. With distributed computing becoming the de facto model for delivering tightly coupled integration with existing information systems, a separate business layer, such as application layer 42, gives the document composition system 30 immense flexibility in both its technical architecture and distribution.

The database layer 44 provides a repository for a collection of data that is organized in a way that its contents can easily be accessed, managed, and updated. The database layer 44 may include a relational database, which is a tabular database in which data is defined so that it can be reorganized and accessed in a number of different ways, a distributed database that can be dispersed or replicated among different points in a network, and/or an object-oriented programming database that is congruent with the data defined in object classes and subclasses. Fundamentally, the database layer 44 contains aggregations of data records or files, such as design components, product catalogues, and inventories, and customer profiles.

In general, a layered architecture design refers to the development of modules by using other existing modules, as will be recognized by one skilled in the art. This yields an implementation hierarchy. For example, a first module may use some or all the components of a second module and a third module. In another possible example, the second module and the third module may use some or all of the components of the first module. The only limitation in the variations and combinations in module dependencies is the number of modules which are implemented.

Referring again to Fig. 1, the functionality of the presentation layer 40, and the code that implements that functionality, is completely independent of the code of the lower layers, which may include the application layer 42 and/or the database layer 44. Furthermore, in another embodiment, the functionality of the presentation layer 40 and the database layer 44 may be completely described in the application layer 42.

One of the advantages of the multi-layered approach of the document composition system 30 is that it permits very rapid, bug-free changes to the code itself. This advantage is further enhanced by an enhancement of the multi-layered approach in which the application layer 42 is further defined by sub-layers, as shown in Fig. 1. These sub-layers may include a specification sub-layer 41 (which may include, for example, rules or conditions) and a implementation sub-layer 43 (which processes the rules or conditions contained in the specification sub-layer 41).

In one embodiment, the functionality of the application layer 42, and the code that implements that functionality, are completely independent of the code of the implementation sub-layer 43. Furthermore, the functionality of the implementation sub-layer 43 may be completely described in the specification sub-layer 41. One skilled in the art recognizes that there are many different variations and combinations one can implement by using a layered methodology, all of which are within the scope of the present invention.

Another great advantage of the multi-layered architecture of the present invention is that it facilitates maintenance. More particularly, the multi-layered design simplifies the understanding of the code as it existed at the time of its development. Understanding what the program does conceptually, as well as in fine detail, is fundamental, especially considering that the time it takes to understand a program may consume up to 50-90% of the maintenance time. Therefore, the lack of understandability greatly complicates the task of software maintenance, making it more time consuming. Furthermore, lack of understandability limits the possibilities of the evolution and further improvements to the document composition system 30.

Referring now to Fig. 2, a block diagram of the preferred embodiment is shown with the three major layers (the presentation layer 40, the application layer 42, and the database layer 44) expanded to include other major elements of the document composition system 30. More specifically, the presentation layer 40 is the menu layer, and is capable of presenting different menus to users such as marketing users 46, technical users 48, and other users 50. The presentation layer 40 includes a collaboration support element 52, and a graphical user interface ("GUI") tool 54. The collaboration support 52 is interposed between the users 46, 48, and 50 and the GUI tool 54, and allows for project collaboration with the document composition system 30. The collaboration support element 52 also allows the marketing users 46, the technical users 48, and the other users 50 to access the GUI tool 54. With the customer's document composition work residing in a collaborative project environment, such as the collaboration support element 52, there may be a requirement for multiple users, such as the marketing users 46, the technical users 48, and the other users 50, to review and approve the work of a single user.

In one embodiment, the document composition system 30 enables various users, such as the marketing users 46, the technical users 48, and the other users 50 to access, review, and approve the work from anywhere. Additionally, clients are able to build their own support communities. The collaboration support element 52 may provide collaborative customer support capability empowering customers to provide up-to-date versions of the product to all their distributed end users, to deliver round the clock support tools and product information, in a centralized and unified order. The collaboration support element 52 may be LAN, WAN, or web-based.

In another embodiment, workflow may be incorporated into the collaboration support element 52 to provide levels of approval to the distributed, collaborative environment. For example, documents may not be delivered to customers until the documents are completely sent through all levels of the collaborative work environment.

### Graphical User Interface ("GUI") Tool

Referring again to Fig. 2, the GUI tool 54, a first major component, helps to provide a distributed LAN/WAN based document design environment. The GUI tool 54 resides in the presentation layer 40 (Figs. 1 and 2) and is connected to a centralized database 58, located in the database layer 44, a processing engine 62, and the application layer 42. Elements of a GUI tool 54 (not shown) may include such things as: windows, pull-down menus, buttons, scroll bars, iconic images, wizards, the mouse, and even virtual reality interfaces (none of which are shown herein).

One of the advantages of the creation of the GUI tool 54 is ease of use. The front end of the GUI tool 54 provides the look, feel, and functionality of word processing software, such as Microsoft Word. The GUI tool 54 may include such functions as drag and drop, toolboxes, WYSIWYG (What You See Is What You Get) presentation (WYSIWYG enables the user to see on the display screen exactly what will appear when the document is printed), and configuration management, in which users will only have access to the functionality required to allow them perform their portion of the document creation process.

The GUI tool 54 allows end users to define all of the design components required to create and design outbound customer documents. In the preferred embodiment, design components consist of data layouts and data fields, which are used to drive the creation of the documents and to create business rules; data layouts and data fields are placed on the document to personalize each customer document. In addition, text, images, and variable data governed by business rules (conditional logic) may be placed into each document. Output parameters, consisting of the number of each output file and the different output file types, may also be defined. In one embodiment, users can specify multiple output files for each document. For each output file created, additional parameters can be defined to enhance the post-processing process. Parameters such as specified sorting of the output file, creation of companion files, and barcodes may be added to each output file definition. All of these functionality characteristics may be implemented in GUI tool 54.

The grouping of the marketing users 46, the technical users 48, and the other users 50, collectively users, represents the ease of use advantage of the document composition system 30 of the present invention. The document composition system 30 is designed to allow users of all skill levels to be involved in the document creation process. This is accomplished by enabling the customization of the front-end GUI tool 54 to cater to the specific job, role, function, and desire of each of the end users 46, 48, and 50. Specifically, a simplistic interface may be provided for non-technical users, such as the other users 50, and more comprehensive interfaces may be provided for highly skilled technical users, such as the technical users 48. The GUI tool 54 may be adapted to track the activities of the user to create a layout for the GUI tool 54 based on the monitored activities. This tracking functionality further contributes to the ease of use of the GUI tool 54.

### Centralized Database

Still referring to Fig. 2, another major component of the preferred embodiment is a centralized database 58. The centralized database 58 is one of the elements of the database layer 44 (Figs. 1 and 2). All objects mentioned above (logos, field, records, output management constructs, document sections, etc.) created in the GUI tool 54 are stored in a shared, centralized database 58. The database structure of the centralized database 58 allows for the re-use of components across multiple documents, and for a collaborative distributed development environment using the collaboration support element 52, greatly reducing the time required to create and maintain applications. The collaboration support element 52 allows users to access the centralized database 58 for document creation via a LAN or a WAN. Some of the advantages of using a centralized database 58 for object storage are the following: rapid application development (time to market), project collaboration, component re-use, data consolidation, multifaceted security, section and document versioning, and ease of use.

The centralized database 58 helps facilitate the use of skins or shells 56, which allows the end users 46, 48, and 50 or system administrators to customize the appearance presented by the document composition system 30 based on user preferences, user profiles, or group profiles. Each individual end user's profile may be stored in the centralized database 58 as a skin/shell 56 as part of the database layer 44. For example, if a user has no need to know about the data layout behind the customer document, access to the data portion of the solution will not be made available to that user. In fact, in the preferred embodiment, the user will not even know that portion of the solution exists. This may be implemented by masking the options or functions or by excluding the unneeded options or functions from the end user's GUI tool 54 or software.

In addition, the manner in which an individual uses the product will determine the way the product looks to that user. Hence, in the preferred embodiment, the document composition system 30 tracks the activities of its end users and creates or modifies a GUI tool 54 or interface based on the tracked activities to produce a more efficient layout of the options and functions available to the end users 46, 48, and 50. The document composition system 30 thereby is a user-friendly tool which is adaptable for any type of user.

In addition to having access to all the objects stored in and available from the centralized database 58, users can securely access and share common components of their document design and maintenance (such as conditions or rules, mathematical procedures, data definitions, graphics, fields, document sections, etc.). This design characteristic allows users to reuse document components that would otherwise typically take significant investments of time to create and test. The security in place ensures that only approved users will be granted access to the document composition system 30. Therefore, in one embodiment, the document composition system 30 may have direct interfaces to existing security processes, whether an existing database or a service directory 60, to streamline the installation process and to allow each corporation using the document composition system 30 to dictate its own security parameters.

As shown, the centralized database 58 is connected to, and is optimized to interface with, the service directory 60, which may be an extension of a corporation's pre-existing security processes. Those skilled in the art will appreciate that there are many different ways to provide the directory service 60, any of which may be incorporated into the document composition system 30. Different methods allow different kinds of information to be stored in the directory service 60, place different requirements on how that information can be referenced, queried, and updated, and how the directory service 60 is protected from unauthorized access.

For example, the directory service 60 may be local, providing service to a restricted context (e.g., the finger service on a single machine). Another example would have the directory service 60 be a global providing service to a much broader context (e.g., the entire Internet).

The document composition system 30 may be optimized to interface with global directory services, which are usually distributed, meaning that the data they contain it spread across many machines, all of which cooperate to provide the directory service 60. More particularly, the document composition system 30 may interface with a global directory model using the Lightweight Directory Access Protocol ("LDAP").

An LDAP directory is a directory service protocol that runs over a Transmission Control Protocol/Internet Protocol ("TCP/IP") network, which is a de facto standard for transmitting data over networks. Those skilled in the art will appreciate that the details of LDAP are defined in industry standard RFC 1777, which is The Lightweight Directory Access Protocol. LDAP directory service is based on a client-server model. One or more LDAP servers contain the data making up the LDAP directory tree. An LDAP client connects to an LDAP server and queries it. The server responds with the requested information, or with a pointer indicating the location where the client can obtain the information (typically from another LDAP server). No matter which LDAP server a client connects to, it will see the same view of the directory; a name presented to one LDAP server references the same entry it would reference at another LDAP server. This important feature of global directory services and of LDAP directories is fully contemplated by the document composition system 30, which is optimized to interface with global directory services of the service directory 60.

### Processing Engine

Referring still to Fig. 2, the third major component of the document composition system 30 is a processing engine 62 which may runs on any of a plurality of platforms, including, but not limited to, Windows NT/98/2000/XP, Sun Solaris, HP-UX, AIX, MVS, and OS400.

As discussed previously, the application layer 42 encapsulates the intelligence or the business rules of the document composition system 30, with the processing engine 62 acting as the brain. Essentially, the processing engine 62 is the element that performs the essential functions for other elements of the document composition system 30. The processing engine 62 may be the central element in the document composition system 30, coordinating the overall operation of other programs or elements of the document composition system 30. The processing engine 62 receives instructions from the GUI tool 54 and the specifications for components for the documents from the centralized database 58 through the application layer 42.

The processing engine 62 is also connected to a customer data file 64 and to one or more record system(s) 66. The processing engine 62 merges and/or maps the customer data file 64 (which comes from one or a plurality of record system(s) 66, which may include upstream systems, billing systems, customer systems, customer relationship systems, or legacy systems) with the objects (document layouts, data layouts, output parameters, etc.) being defined in the GUI tool 54. The processing engine 62 is connected to a number of output elements, including a printer 70 via a document for print element 68, an archival software 74 via a document for archival element 72, and an electronic delivery solution 78 via a document for electronic delivery element 76. The processing engine 62 may output the processed data to create output files for the printer 70, the archival software 74, and the electronic delivery solution 78.

The processing engine 62 may create multiple output files based on one document template with one pass of input data. Alternately, the document composition system 30 may create any of a plurality of printer outputs for the printer 70, including but not limited to Advanced Function Presentation ("AFP"), Metacode, Postscript, Printer Control Language "PCL"), and Personalized Print Markup Language ("PPML").

The document composition system 30 may also create any of a plurality of electronic delivery outputs for the electronic delivery solution 78, including but not limited to Extensible Markup Language ("XML"), Portable Document Format ("PDF"), Hypertext Markup Language ("HTML"), Compact HTML "CHTML"), Handheld Device Markup Language ("HDML"), Wireless Markup Language "WML"), and Extensible Style Sheet Language ("XSL"). The advantage of using the electronic delivery solution 78 is apparent when considering the cost of sending conventional documents through the mail or by courier. The cost increases even further if consumers are required to respond to the document, as in the case of bills. The cost of billing conventionally and paying bills conventionally are high, both for businesses and for consumers. Therefore, the advantages of the electronic delivery solution 78 in terms of cost reduction are readily apparent and beneficial to both billers and consumers.

The electronic delivery solution 78 may be implemented through interfaces with independent bill service providers, customer service providers, and/or consolidators, as well as through portals hosted by third parties. Alternatively, the electronic delivery solution 78 may contain all of the functionalities necessary to present bills or other documents to the customer, essentially enabling bills to be created, delivered, and paid over the Internet.

The following narrative is a detailed description of features that makes the document composition system of the present invention an intuitive, user-friendly tool for companies to use to create all customer communications. With these features, the document composition system of the present invention allows for the creation of a broad range of documents, from high volume recurring documents to customized, real-time, one-off documents.

### Permission Based Access

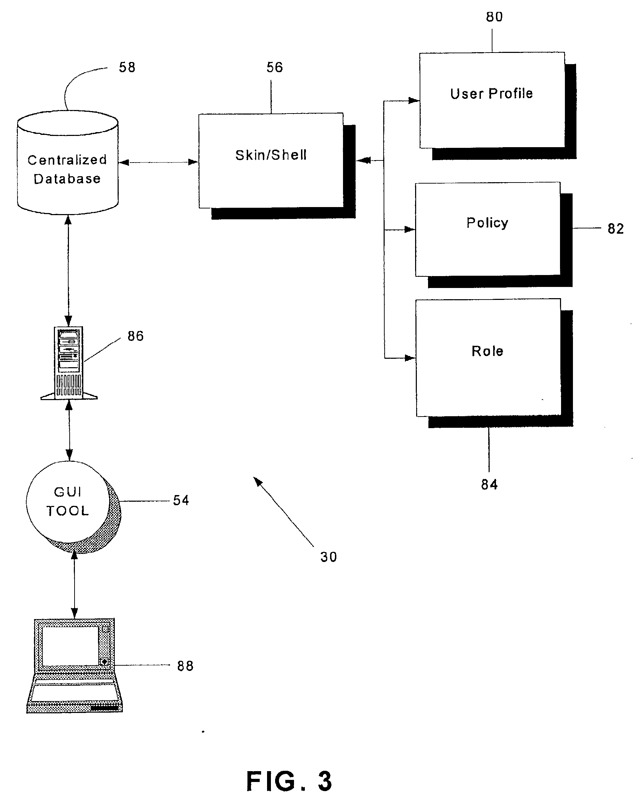

Figs. 3-8 show the configuration management component, which allows permission based access to the document composition system 30. As will be seen, the configuration management feature integrates a plurality of elements from the presentation layer 40, the application layer 42, and the database layer 44 (all shown in Fig. 1).

Referring first to Fig. 3, the configuration management feature of the document composition system 30 allows permissions to be assigned for providing functionality, true object re-use, and collaborative development environments. An end user workstation 88 interfaces with the GUI tool 54 to access an application server 86, which is connected to the centralized database 58 where the skin/shell 56, a user profile 80, a user policy 82, and a user role 84 are stored. The user profile 80 may include such items as user name, user ID, user password, and identification of associated policies and rules. The user policy 82 may include automatic login switch information, password expiration times, the number of login retries allowed, an minimum password length. The user role 84 defines the level of access to system components (components to which no access, viewing access only, or full are allowed), design information (document design, data design, and output design), and any other desired functionality.

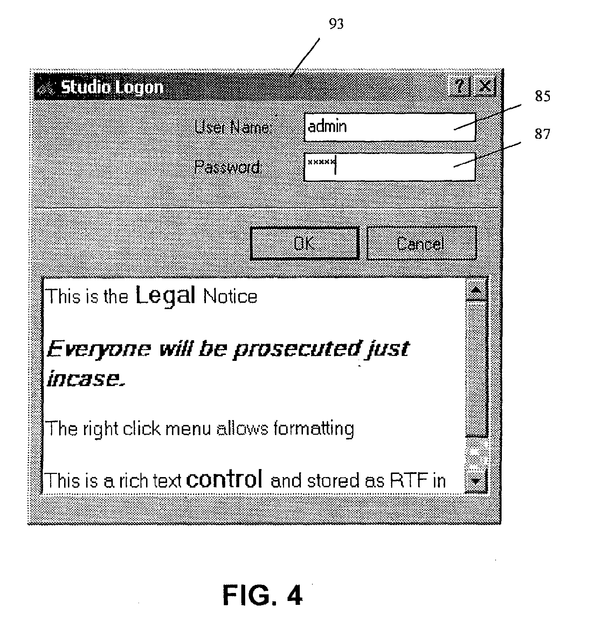

Referring now to Fig. 4 in addition to Fig. 3, the end user logs into the front-end using the GUI tool 54 of the document composition system 30 from a workstation 88. The document composition system 30 then requests a user ID 85 and a password 87 from the end user, as shown in the login screen 93 shown in Fig. 4. The document composition system 30 verifies and confirms the user ID 85 and the password 87 before granting access to the document composition system 30.

The user ID 85 may be created for each individual end user. An administrator can create special permissions for each end user within the skin/shell 56, which sets the functionality to be available to each end user by way of the user profile 80, the user policy 82, and the user role 84 in a manner to be described below.

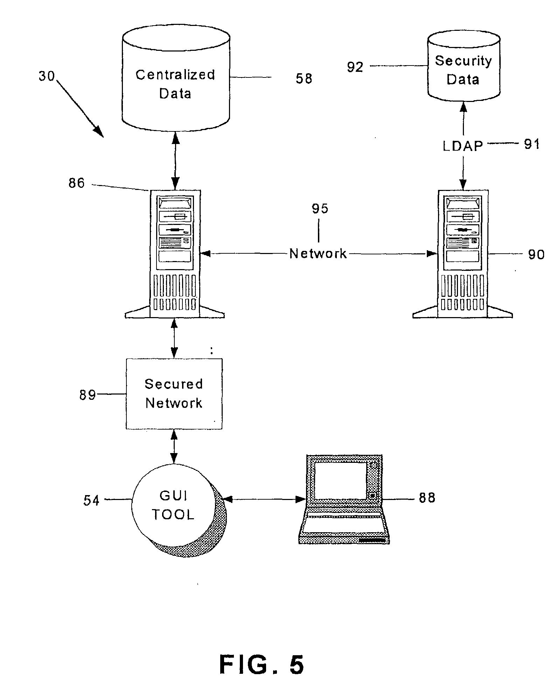

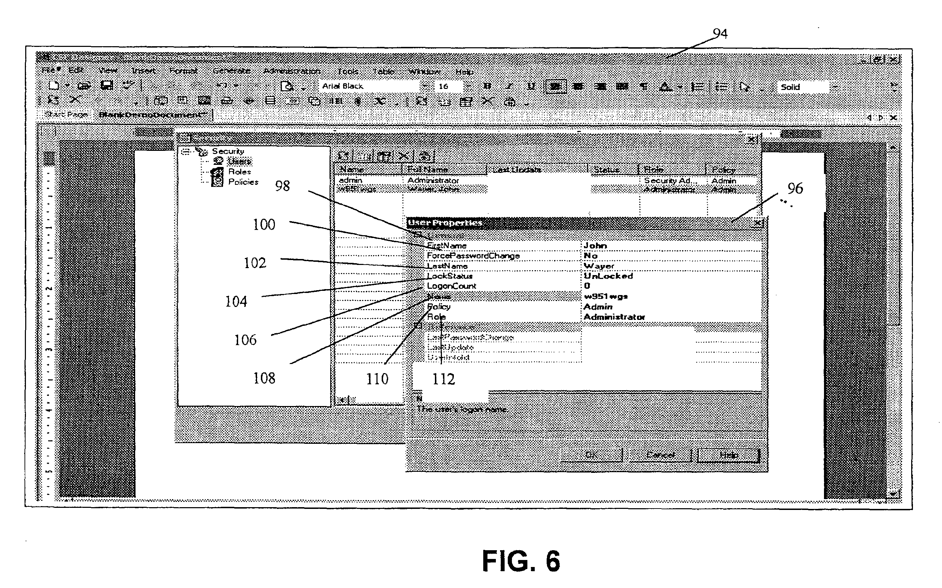

Referring now to Fig. 5, based on the user ID 85 and the password 87 entered on the login screen 93 (Fig. 4), the document composition system 30 queries the centralized database 58 to identify and confirm the user profile 80 accessed by the skin/shell 56 (Fig. 2). Once the user ID 85 and the password 87 are confirmed, the centralized database 58 sends back appropriate role information to the GUI tool 54. The GUI tool 54 then shows a user interface screen 94 (Fig. 6) to the end user based on how end user or groups of end users are categorized. The user interface screen 94 grants access to some functionalities while restricting access to other areas of the interface based on the user's business need or function. For example, a user from marketing may have permission to alter visual document changes, but may not be able to alter the record hierarchy. In short, the GUI tool 54 is modified based on user role and corresponding access rights information received from the centralized database 58.

Referring back to Fig. 5, the end user may access the document composition system 30 through a secured network 89 which is further connected to the application server 86, the centralized database 58, the GUI tool 54, a corporate application server 90, and an external database 92. In a corporate application of the present invention, the end user can log into the secured network 89 using corporate security procedures and a corporate user ID. Based on the user ID entered when logging into the secured network 89, the document composition system 30 residing on the application server 86 accesses the external database 92, through the corporate application server 90 and via a network 95, to identify a user profile. The external database 92 and the corporate application server 90 may be connected via an LDAP 91. The external database 92 can send authentication information and role information to the application server 86, the GUI tool 54, and the centralized database 58. Based upon the information passed back from the centralized database 58 and/or the external database 92, the application server 86 modifies the GUI tool 54 to the specification of the individual end user profile or group profile. The configuration management component also allows an administrator to create new user IDs and passwords or accesses the corporate database 92 to authenticate the user before granting the user access to the document composition system 30.

Figs. 6-8 are screenshots of the properties dialog box that demonstrate some of the features of the configuration management component of the document composition system 30 of the present invention. As discussed, the configuration management component is used to set details, roles, and policies applying to one or more users or groups of users, regardless of which computer they log onto. In other words, the configuration management component defines each user recognized by the security policy and specifies the roles that can be associated with each user.

Referring first to Fig. 6, the screenshot shown features a user properties dialog box 96 of the document composition system 30. In general, a First Name field 98 is a user's first name. The Last Name field 102 is a user's last name.

A field Force Password Change 100 indicates (Yes or No) whether the user will be forced to change his or her password at the time of the next login. To change the indicator, the administrator simply selects the Force Password Change field 100 and clicks on the arrow (not shown) next to the field to select the appropriate option. Any users who were locked out and were subsequently unlocked by an authorized user or administrator are also forced to change their passwords the next time they log in. The user's password then remains in effect until the user changes it voluntarily, the password expires, or the user is forced to change it again.

A Lock Status field 104 defines a user's lock status (locked or unlocked), allowing the administrator to grant or deny a user access to the system. To change the status, an authorized user or the administrator simply selects the Lock Status field 104 and clicks the arrow next to the field (not shown) to select the appropriate option.

A Logon Count field 106 allows the administrator to set the number of failed login attempts before denying a user access to the document composition system 30.

A Name field 108 is a user's system name.

A Policy field 110 allows the administrator to assign policy to a user. To change the user's policy, the administrator can select the Policy field 110 and click the arrow next to the field (not shown) to select the appropriate option. Similarly, a Role field 112 allows the administrator to assign roles to users.

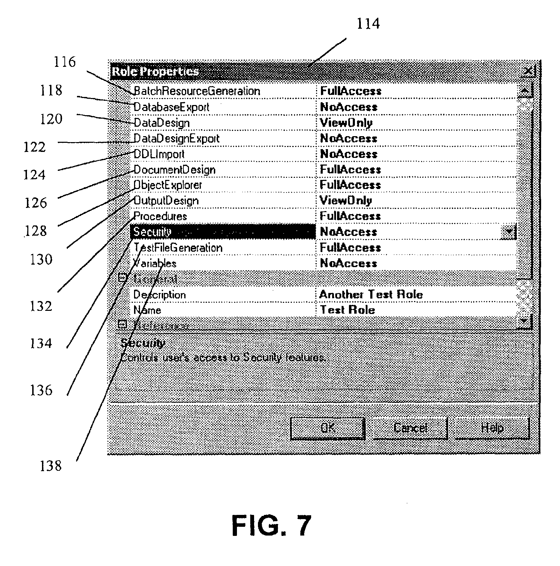

Referring next to Fig. 7, a screenshot of a Role properties box 112 is shown. The Role properties box 114 is used to define a user role in the document composition system 30. For example, a Batch Resource Generation field 116 controls whether a user may generate resource files for batch processing. With full access, a user may execute batch resource generation. With no access, a user may not execute batch resource.

A Export Database field 118 controls whether a user may export a database from the document composition system 30. With full access, a user may export a database. With no access, a user may not export a database.

A Data Design field 120 controls a user's access to data designs. Full access of the Data Design field 120 allows a user to view, create, and modify data designs. View only allows a user to view data designs but prohibits a user from creating a new data design or modifying an existing one.

An Export Data Design field 122 controls whether a user may export data designs. With full access, a user may export data designs. With no access, a user may not export data designs.

An Import Data Definition Libraries ("DDL's") field 124 controls whether a user may import DDL's. With full access, a user may import DDL's. With no access, a user may not import DDL's.

A Document Design field 126 controls a user's access to document designs. Full access enables a user to view, create, and modify document designs, while view only access only allows a user to view the document design.

An Object Explorer field 128 controls a user's access to the object explorer. The Output Design field 130 controls a user's access to output designs (full access or view-only access).

A Procedures field 132 controls a user's access to procedures (full access, no access, or view only access).

A Security field 134 controls a user's access to security features (full access, no access, or view only access).

A Test File Generation field 136 controls whether a user may generate test input files from a data design (full access or no access).

A Variables field 138 controls a user's access to user variables with three settings: full access, no access, or view only access. In the preferred embodiment, the access setting for the Object Explorer field 128 activity overrides the access setting established for the following fields: the Data Design field 120, the Document Design field 126, the Output Design field 130, the Procedures field 132, and the user variables field 138. For example, if a user has view only access for the Variables field 138 but has full access for the Object Explorer field 128, the user will have full access to the variables in the object explorer.

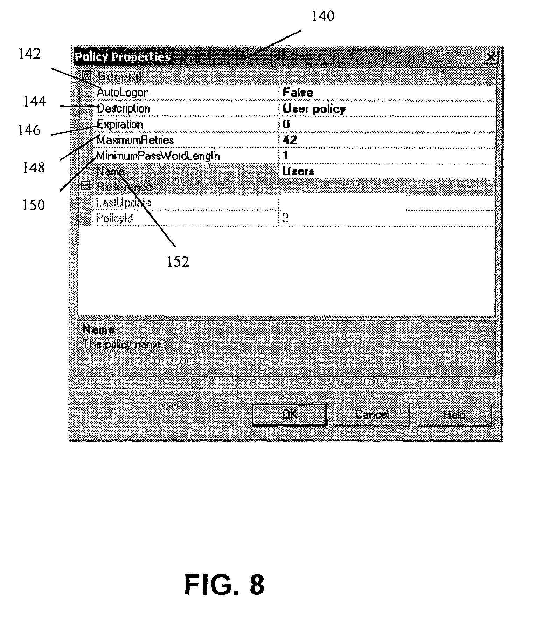

Fig. 8 is a screenshot of a policy properties box 140. The policy properties box 140 is used to define a user's policy in the document composition system 30 of the present invention. For example, an Auto Logon field 142 indicates whether the document composition system 30 intercepts the user's workstation user ID as the system use ID, and bypasses the system login process if the two ID's match.

The Description field 144 is the description of the policy.

The Expiration field 146 sets the number of days after which the user password will expire. When a user sets or changes his or her password, it is valid for the number of days set by the administrator, after which the user will be required to define a new one. A zero in the Expiration field 146 means that passwords never expire.

A Maximum Retries field 148 sets the maximum number of times a user can attempt to log in to the system unsuccessfully. After this number of attempts is exceeded, the user is locked out of the system and must be unlocked by an authorized user. A zero in the Maximum Retries field 148 means that users can make unlimited unsuccessful attempts to log in.

A Minimum Password Length field 150 sets the minimum number of characters in a valid password.

A Name field 152 establishes the name of the policy.

### Thin Client System

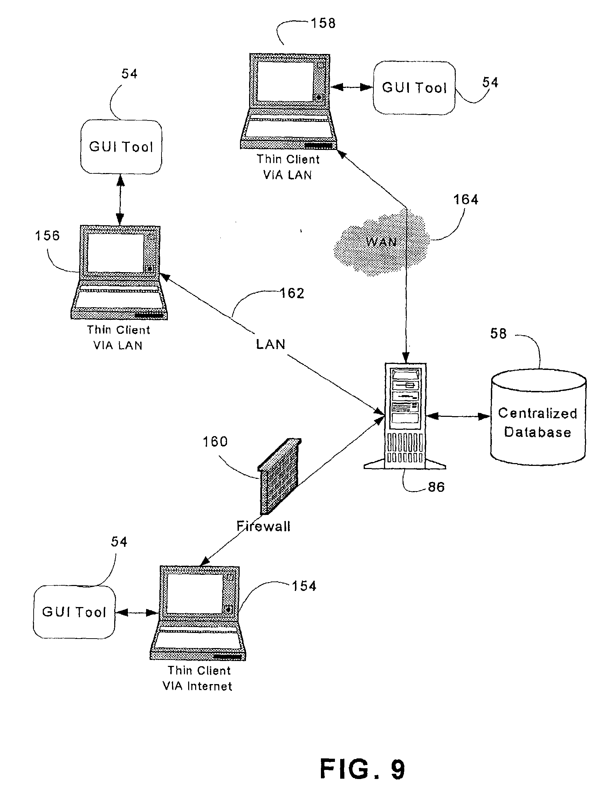

Referring next to Fig. 9, a network diagram of a thin client feature of the document composition system 30 of the present invention is illustrated in which the bulk of the data processing occurs at the application server 86. Although the term thin client refers to the upstream location of the software in which the present invention resides, the thin client feature may include server-based computing in which back-end centralized servers, which may be capable of serving either fat (thick) or thin clients, power the thin client feature of the document composition system 30.

The thin client feature of the document composition system 30 contrasts greatly with typical thick client applications found in the prior art in which each workstation must have application code resident thereupon. With a thick client application, the application code, including code from the presentation layer 40, the application layer 42, and the database layer 44, is resident on the local computer. In a thin client environment, product upgrades and fixes are immediately available, whereas in a thick client environment, time is required to upgrade the solution on every machine on which it is installed.

With a thin client environment, the document composition system 30 may be installed and live on the central application server 86, or on a group of application servers. All application processing is performed on the application server 86, and not the client desktop workstations 154, 156, and 158. This means that only the GUI tool 54, a keyboard (not shown) and a mouse (not shown) are passed to the client desktop workstations 154, 156, and 158. In other words, an end user may remote control a Windows session occurring on the application server 86.

In the embodiment shown in Fig. 9, the thin client feature includes GUI tools 54 residing on the client desktop workstations 154, 156, and 158, in which the client desktop workstations 154, 156, and 158 are connected to the application server 86 (which further includes the centralized database 58) via networks 160 (which may include a firewall), LAN 162, and WAN 164, respectively. The document composition system 30 is a thin client application where an end users have front end GUI tools 54 on the client desktop workstations 154, 156, and 158. In other words, only the presentation layer 40 (Fig. 1) is residing on the end user's workstation. The end users may access the application layer 42 (Fig. 1) and the database layer 44 (Fig. 1) of the document composition system 30 via LAN 162 through the client desktop workstation 156, via WAN 164 through the client desktop workstation 158, or via the Internet or another network 160 (using the firewall as the gateway) through the client desktop workstation 154. The end users using the client desktop workstations 154, 156, and 158 will access identical application code, residing on the application server 86. The end users using the client desktop workstations 154, 156, and 158 share an identical database, such as the centralized database 58, and source code residing on the application server 86. By updating the application server 86, end users using the client desktop workstations 154, 156, and 158 utilize identical applications based on their assigned permission access, without the need to update code on the client desktop workstations 154, 156, and 158.

In the preferred embodiment, the thin client feature of the document composition system 30 may also employ load balancing functionalities in which the document composition system 30 may be load balanced across multiple servers and may allow the servers to be configured as a logical group or as a server farm. Load balancing increases overall performance by distributing the client sessions across multiple servers. Load balancing the thin client feature may also provide fault tolerance.

As can be seen, the thin client feature of the document composition system 30 saves companies money by reducing support and hardware costs, while providing access anytime anywhere to the document composition system 30. The thin client feature may also reduce the need for companies to upgrade company desktop systems every two years. More importantly, the thin client feature of the document composition system 30 may use existing desktop systems and/or thin client terminals, which provides a substantial reduction in cost as compared to fully configured desktop computers.

### XML as Transfer Mechanism

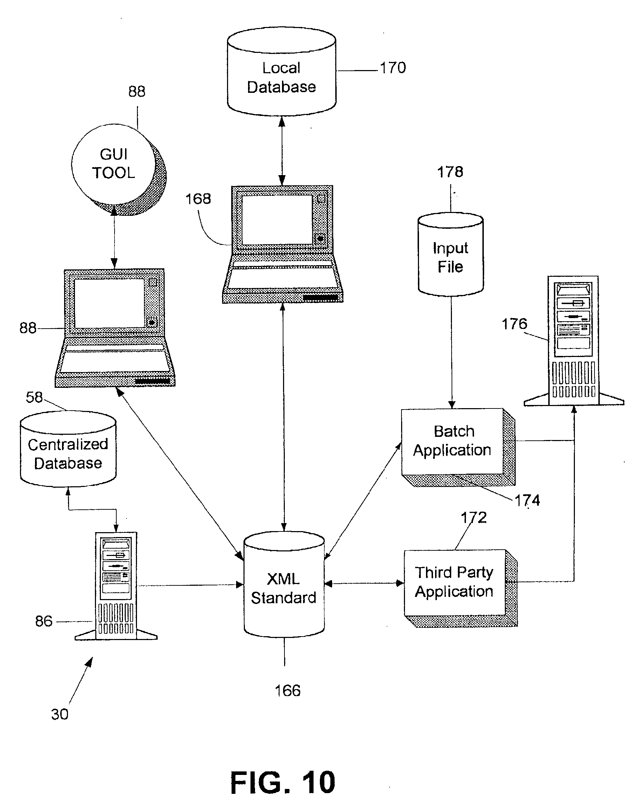

Referring to Fig. 10, the use of Extensible Markup Language ("XML") as the transfer mechanism for communication is shown. The XML transfer mechanism is used by the presentation layer 40 (Fig. 1), the database layer 44 (Fig. 1), and especially the application layer 42 (Fig. 1) to provide a universal communication mechanism to create a common information format and to share both the format and the data internally and externally with other solutions.

The XML transfer mechanism uses an XML standard 166 to communicate between the application server 86 (which in turn communicates with the end user workstation 88 and the centralized database 58) and a local workstation 168 having a local database 170. The XML standard 166 describes document and business rules and resources. The XML standard 166 also communicates with a third party application 172, and a batch application 174, both of which are connected to a production server 176. An input file 178 provides data to the batch application 174 which runs on the production server 176. The input file 178 provides data input for the batch application 174. The XML transfer mechanism also uses the XML standard 166 for communication between the GUI tool 54, residing on the end user workstation 88, and the processing engine 62 (Fig. 2), residing on the application server 86.

XML is used to communicate with the third party application 172, which may run on a totally different operating system or environment and as well as on the independent batch application 174, which may be configured differently from the document composition system 30. The batch application 174 allows a batch job to be assigned to the document composition system 30, which will operate without further user interaction. For example, the end user can assign such batch jobs as printing requests or data merging requests to the batch application 174. The end user can use the batch application 174 to assign certain batch jobs to run automatically at a certain time. The batch application 174 operates in the background, giving the application server 86 priority, or during a time interval when the application server 86 is waiting for end user requests.

XML, a subset of the Standard Generalized Markup Language ("SGML"), is the universal format for structured documents and data on the Internet, intranets, and other networked computers. XML is used for structuring data that includes, but is not limited to, data contained in spreadsheets, address books, configuration parameters, financial transactions, and technical drawings. XML is a set of rules (e.g. guidelines or conventions) for designing text formats that allows the present invention to structure the data within and created by the present invention. XML is not a programming language, and the end user 88 does not have to be a programmer to use it or learn it. XML makes it easy for the document composition system 30 to generate data, read data, and ensure that the data structure is unambiguous. XML is extensible, platform-independent, and it supports localization and internationalization. Therefore, the use of XML as a transfer mechanism for communications between the GUI tool 54 (Fig. 2) and the processing engine 62 (Fig. 2) provides customers and end users with an industry standard file format for all of their documents.

The document composition system 30 is designed to produce statements, bill, letters, notices, and/or other structured data and may store that data on disk, using either a binary or text format. One advantage of a text format is that it allows users, if necessary, to look at the data without the program (the document composition system 30) that produced it. Users can read the XML text format instantly with a text editor. XML text formats also allow developers to more easily debug applications.

Since XML is a text format and it uses tags to delimit the data, XML files are nearly always larger than comparable files stored in binary format. The advantages of a text format are evident, and the disadvantage is disk space, which is less expensive than it used to be, and today's compression programs can compress files faster and more efficiently. In addition, communication protocols such as modem protocols and HTTP/1.1, the core protocol of the Internet, can compress data in real-time, saving bandwidth as effectively as a binary format.

In addition, XML allows the document composition system 30 to define a new document format by combining and reusing other formats. Since two formats developed independently may have elements or attributes with the same name, care must be taken when combining those formats (e.g., does "<p>" mean paragraph or person). To eliminate name confusion when combining formats, XML provides a namespace mechanism.

By integrating XML as the basis for the transfer mechanism, the document composition system 30 gains access to a large and growing community of tools and engineers experienced in the technology. The use of XML as a transfer mechanism for transferring data between the GUI tool 54 and the batch application 174 provides customers with an industry standard file format for all of their documents. The XML format also provides efficiencies because it is easier for customers to edit and debug. XML facilitates the integration of the document composition system 30 with third party software, either with additional XML resources being merged with the document composition system 30 or for the document composition system 30 to be used as the input to another system.

The use of XML in the creation of real-time, on-demand documents enhances the relationship a company has with their clients by providing up to the minute documents and account status information. Nightly batch runs are used to create the majority of customer specific documents, but the ability for a worker to generate a document remotely upon request, preferably with XML, enhances customer support and relationships. The use of XML as the transfer mechanism makes this process easier and more efficient than ever.

### Web Services

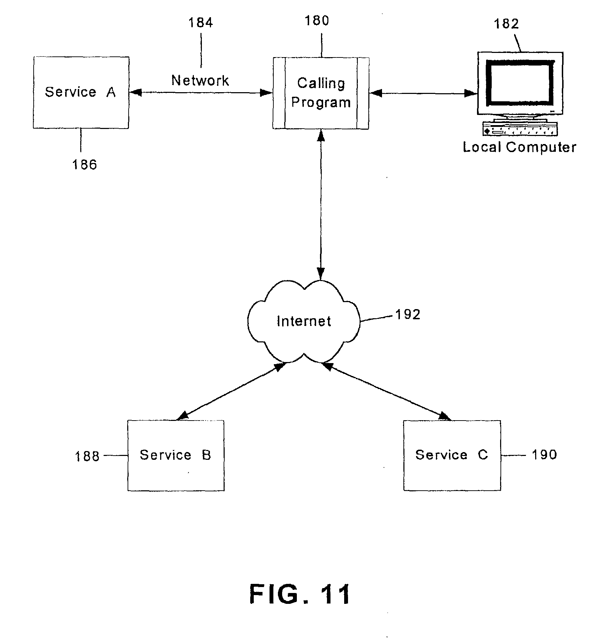

Referring next to Fig. 11, a diagram of a web services feature of the document composition system 30 of the present invention is shown. In the preferred embodiment, the web services feature of the present invention provides a standardized way for integrating Web-based applications using the Extensible Markup Language ("XML"), Simple Object Access Protocol ("SOAP"), Web Services Description Language ("WSDL") and Universal Description, Discovery and Integration ("UDDI") open standards over an Internet protocol backbone. XML is used to tag the data, SOAP is used to transfer the data, WSDL is used for describing the services available, and UDDI is used for listing what services are available.

As discussed earlier, XML is a pared-down version of Standard Generalized Markup Language ("SGML"), designed especially for Internet documents. XML enables companies to define, transmit, validate, and interpret data between applications and between organizations. SOAP provides a way for applications to communicate with each other over the Internet, independent of platform. SOAP relies on XML to define the format of the information, and then adds the necessary HTTP headers to send it. WSDL is an XML-formatted language used to describe a Web service's capabilities as collections of communication endpoints capable of exchanging messages. UDDI is a Web-based distributed directory that enables business to list themselves on the Internet. Similar to a traditional phone book's yellow and white pages, UDDI enables companies to discover and find each other. Using these standards, the web services feature of the present invention allows companies to communicate data without having intimate knowledge of each other's information technology ("IT") systems behind the firewall.

In the preferred embodiment, the web services feature of the document composition system 30 may be embodied in the architecture design of the document composition system 30, in which the multi-layer architecture is designed as a modular application that perform specific business tasks. The web services feature of the document composition system 30 includes several programs (and may also include human resources), including a calling program 180 coupled to a local computer 182, and a Service A 186 connected to the calling program 180 through a network 184. The calling program 180 may be further coupled to the Internet 192 to be distributedly connected (which will be explained below) to a Service B 188 and a Service C 190.

The web services feature allows several programs providing simple services, such as the Service A 186, the Service B 188, and the Service C 190, to communicate and to interact in order to permit complex operations. Services may include, for example, storage management, customer relationship management, or more limited services such as verifying credit history or providing computing resources. These services run behind the scenes, with each program talking to the others (server to server).

Communications between the calling program 180, the Service A 186, the Service B 188, and the Service C 190 may utilize a middleware function (not shown) which serves to tie together or to mediate between the calling program 180, the Service A 186, the Service B 188, and the Service C 190. Alternately, the middleware may provide a messaging service to the calling program 180, the Service A 186, the Service B 188, and the Service C 190 so that they can communicate with each other. The middleware may systematically join together otherwise disparate programs such as the calling program 180, the Service A 186, the Service B 188, and the Service C 190.

In the preferred embodiment, the Service A 186, the Service B 188, and the Service C 190 each consist of the presentation layer 40 (Fig. 1), the application layer 42 (Fig. 1), and the database layer 44 (Fig. 1), respectively.

The web services feature of the document composition system 30 may be an event-driven web services in which the web services provides an architecture for information movement rather than application or program service aggregation or integration. With event-driven web services, data can move from system to system in support of a particular business transaction and/or process. For example, consider moving customer billing information from one system to another system, and/or from one company to another company to support a high volume billing statement process. Using this example, the calling program 180 may monitor a series of customer services, such as utility electric meter services, that invoke the Service A 186, the Service B 188, and the Service C 190 to provide application support for billing the customer for the utility services provided. It is apparent in this and other embodiments of the web services feature of the present invention that the architecture of the web services feature may be so tightly coupled that they appear as a single application. Therefore, the web services feature of the present invention may be implemented in a single tightly integrated application.

The incorporation of XML as the transfer mechanism used by the document composition system 30 makes it easier for systems, such as the Service A 186, the Service B 188, and the Service C 190, in different environments to exchange information, whether through a local network or through the Internet 192. The universality of XML makes XML an attractive transfer mechanism for communicating information between programs incorporated in the calling program 246, the Service A 186, the Service B 246, and the Service C 190. With XML, programmers can use different operating systems and programming languages, yet have their respective software communicate with each other.

The integration of web services into the document composition system 30 makes inter-application communication easy and efficient. In one embodiment, the document composition system 30 uses the Internet 192 as a global bus to tie together various system components. The document composition system 30, when configured as a web service application, may consist of many parts, some of which run on the same local computer 182 as the calling program 180, some of which run on a local network, such as the Service A 186, and others of which run on the Internet 192, such as the Service B 188 and the Service C 190. Any of the components of the web services feature may contain remote subcomponents. A single request or function from the calling program 180 may trigger a cascade of sub-requests linking together the separate parts, residing on the Service A 186, the Service B 188, and the Service C 190.

In the preferred embodiment, the Web services feature of the document composition system 30 defines a set of structured, human readable data formats and makes them open and independent of any particular languages or platforms. This allows the document composition system 30 to create a framework for program-to-program interoperability, binding together Internet-accessible services in various combinations even though different parts of the application are distributed over the network. The loose coupling of separate parts of the application substantially increases the scale of deployment for the document composition system 30.

The web services feature of the document composition system 30 may optionally include an application service provider ("ASP") solution (not shown in the figures). The ASP solution may be used to provide companies access over the Internet to applications and related services of the document composition system 30 that would otherwise have to be located in the companies' computers. The ASP services offer outsourcing opportunities to smaller companies with low budgets for information technology and to larger companies. The ASP service feature allows companies to reassert central control over application cost and usage.

The ASP service of the document composition system 30 may feature a hosting service in which the document composition system 30 is hosted on servers located in a data center(s). These servers may be implemented using the thin client feature as discussed above or other available thin client software, such as Microsoft Windows 2000 Terminal Services and Citrix MetaFrame, thereby enabling customers to access the document composition system 30 over the Internet, through a Virtual Private Network ("VPN"), and/or via dial-in access. The ASP service of the document composition system 30 will reduce overall cost of ownership and ease of access and deployment.

### Intelligent Resource Engine

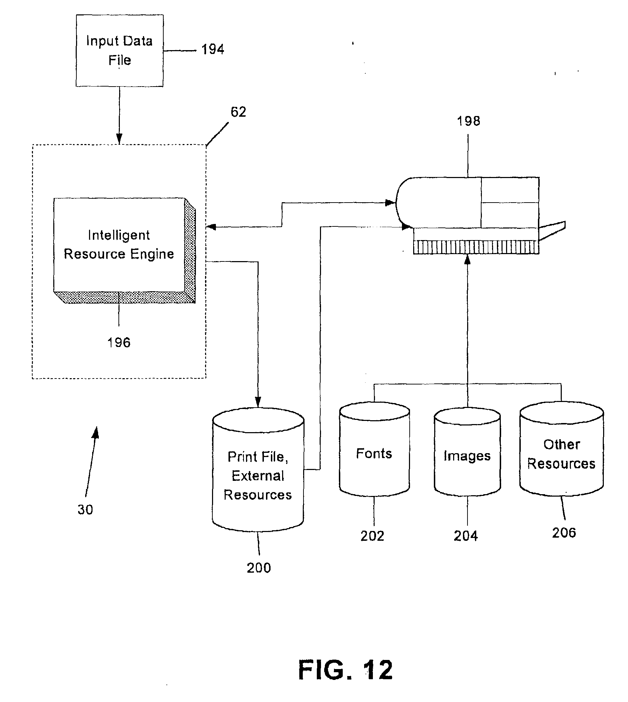

Referring next to Fig. 12, the operation of an intelligent resource engine 196, which resides in the processing engine 62, is illustrated. The resource engine 196 ensures that print streams are efficiently created, driving printers more quickly and ensuring that any and all fonts and images are available for print, thereby reducing print stoppages. As shown, the resource engine 196 is coupled to a printer 198, an input data file 294, and a print file with resources 200. As shown, a printer 278 may include additional resources such as multiple fonts 202, multiple images 204, and other resources 206. The fonts 202, the images 204, and the other resources 206 represent resources resident at the printer 198.

With this feature, users are allowed the option of either placing fonts, images, pictures, signatures and other items directly into the outbound print stream as embedded objects, or alternately placing an identifier into the outbound print stream that references an external object at print time.

More specifically, the resource engine 196 accesses the printer 198 and interrogates it to determine what resources (e.g., the fonts 202, the images 204, and the other resources 206) are present or resident at the printer 198. Those resources present or resident at the printer 198 will simply be referenced within the print stream. Any resources not present or resident at the printer 198 will be included (embedded) within the print stream (e.g., the print file with resources 200).

### Check Imaging

Currently, check imaging consists of integrated imaging applications and processing alternatives that interact with a central image database. They generate image statements, create an image archive, and provide full image item processing. However, the current check image processes are inefficient. Current check imaging begins with the step of obtaining an input file from a legacy system and creating a statement in AFP without the images. Next, the AFP pages are merged with images from a central image database, and then are converted from an AFP file to a PDF file with check images.

The present check imaging process, another feature of the processing engine 62 of the document composition system 30, provides an improved process for check imaging. The check imaging process of the document composition system 30 scales and aggregates the images from an image archive before creating a statement. It also eliminates the need to convert from an AFP file to a PDF file because the statement creation process outputs a PDF file (rather then an AFP file) which will be merged with images from an image archive.

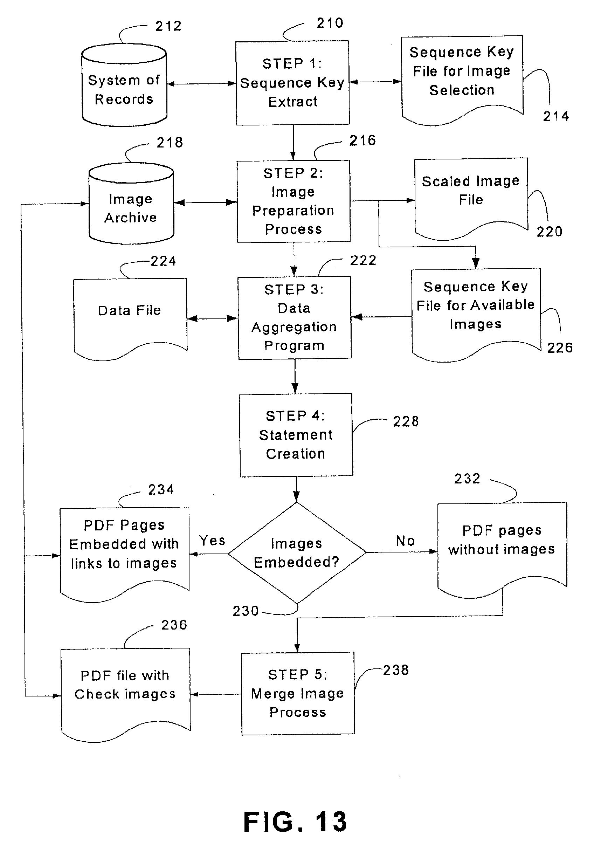

Fig. 13 shows the check imaging process of the document composition system 30 and identifies the preferred steps for producing check images for statements. The first step in the process of producing check images for statements is a Sequence Key Extract step 210, in which the system extracts the specific sequence keys that identify which images are needed for the current cycle run from the Records System 212. The Records System 212 may be, for example, a Demand Deposit Account ("DDA") file or a related file. A Sequence Key File 214, which is the result of the Sequence Key Extract step 210, may contain the fields selected by the customer, such as the bank number, the posting number, and/or the sequence. In addition, the Sequence Key File 214 may also contain parameter fields used to manipulate the check image, such as pell density of the image, length of the image for re-scaling, and width of the image. Customer fields, such as customer account, may also be required for Check Image reporting.

In the preferred embodiment, the Sequence Key Extract step 210 is a generic extraction process that is not confined to any particular industry or customer, and can extract any set of data or specific sequence keys from any client. The Sequence Key File 214 may aggregate its fields of data to accommodate data from any data or sequence keys. For example, a first client may require one particular subset of data, while a second client may require that subset of data plus an additional subset of data that is substantially different from the data required by the first client. The Sequence Key Extract step 210 can accommodate individual data sets for the first and second client without mandating a particular template for either client. Therefore, the clients retain autonomy on how they collect, group, display, and store their data.

In the second step of the check imaging process, an Image Preparation Process step 216 updates the key sequence records with the Relative Byte Address ("RBA"). Additional fields will be filled in (i.e. whether the check was found or not). The check imaging process of the present invention uses a Virtual Storage Access Method ("VSAM") to extract and access data from an Image Archive 218 and the Records System 212 (via the Sequence Key Extract step 210). More specifically, the Image Preparation Process step 216 retrieves all the images that are required for the statement run based on the Sequence Key File 214 generated by the Sequence Key Extract 210 in Step 1. Tiff images may be scaled, transformed to Image Object Content Architecture ("IOCA") format and placed into Scaled Image File 220 as an Entry Sequenced Data Set ("ESDS") VSAM file (Support Extended VSAM for very large files). The Image Preparation Process step 216 updates a Sequence Key File for Available Images 226 with an RBA address. This will be placed in the Advanced Function Presentation ("AFP") output stream so that the images can be retrieved in a later step (the fifth step, which is discussed below). Missing check fields and other customized fields may be updated in the sequence key record based on the processing which occurs.

After the Image Preparation Process step 216, the check imaging process of the present invention uses the updated Key Sequence File for Available Images 226 from the second step as input into the third step, which is a Data Aggregation Program step 222. The Data Aggregation Program step 222 can initiate a report run to create, for example, a missing checks report, an exception summary, and statistics and audit reports. These reports may be outputted in the form of a Data File 224.

In a Statement Creation step 228 (the fourth step), statements are created, following which the system determines whether images are to be embedded in a process decision step 230. If images are to be embedded, then a PDF page 234 is embedded with links to the images stored in the Image Archive 218. If the images are not to be embedded, the batch run produces AFP print streams with space reserved for the images. A system line is generated for the image containing an RBA Key, for example, the X and Y locations. This will be changed to an NOOP (meaning no operation) instruction if there is no image to be embedded.

In a Merge Image Process step 238 (the fifth step), the AFP stream is post processed. Next, it will be determined whether the check image NOOP instruction is present; if so, the information contained within it will be used to place the check image in the print stream. The output is a PDF file with the check images 236 contained therein. The check images 236 will then be printed in the form of a statement which contains all of the check images 236.

All of the components disclosed herein may be used with the tools known in the art to reduce the amount of time it takes for a end user to bring new or revised documents into production, and thereby directly impact productivity and time to market. The document composition system 30 of the present invention is designed to make the process of creating outbound customer communication documents easier and therefore faster and much more cost-effective.

### Operation

Next, the operation of the document composition system 30 will be described. Screenshots of the preferred embodiment of the document composition system 30 are used to illustrate the processes and the document composition features used to build a letter for high volume delivery, whether it be a print element 68 (Fig. 2) or an electronic delivery element 76 (Fig. 2).

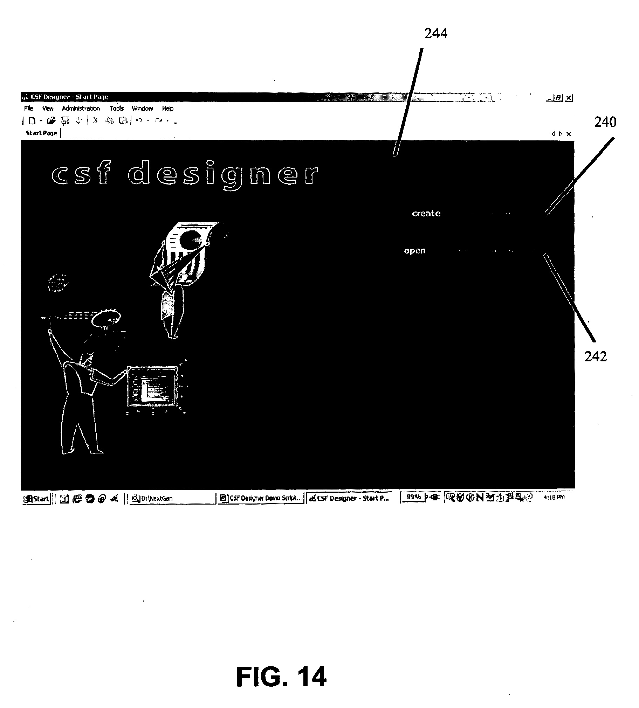

Referring generally to Figs. 14 through 35, which are screenshots of the preferred embodiment of the document composition system 30, some of the capabilities of the document composition system 30 of the present invention are demonstrated. The login screenshot were shown in Fig. 4. After logging in, the main splash screen 244 will appear, which is shown in Fig. 14.

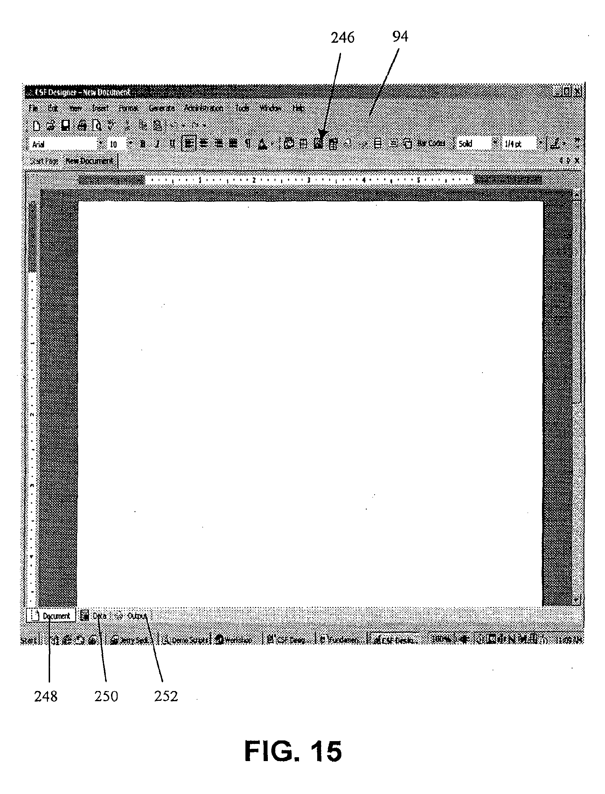

Referring now to Fig. 14, the end user has the ability to create a new document by clicking on a create new document design link 240 or to open an existing document by clicking on open existing document design link 242. If the user selects the open existing document design link 242, the system will allow the user to select an existing design. The user selects the create new document design link 240, a user interface screen 94 appears, as shown in Fig. 15.

Referring next to Fig. 15, a user interface screen 94 has the look and feel of Microsoft Word and is Microsoft Office compliant. Because of user familiarity with the Microsoft Office Suite, the learning curve for the document composition system 30 is significantly reduced by using a similar interface. Also, standard toolbar buttons provide easy navigation and selection of functions, such as New, Open, Save, Print, Print Preview (contained in the drop-down File toolbar), Spell-Check, Cut, Copy, Paste, Undo/Redo, Fonts, and Font Size, which are collectively referred to toolboxes 246. Other word processing functions of the toolboxes 246 include Bold, Italic, Underline, Left Justification, Right Justification, Smooth Wrap, Border, Shade, Paragraph, and colour of fonts.

The toolboxes 246 are defined in a relational database to allow the tools a greater ability to store records and images, and to perform functions such as sorts. The use of relational databases within the toolboxes 246 makes it easier for a plurality of users to have access to these objects, which may be used any number of times. The toolboxes 246 are also dockable, giving the user the capability to define the interface appearance.

As previously discussed, the toolboxes 246 and other options and capabilities, collectively functionalities, of the user interface screen 94 may be configured by an administrator through the use of the configuration management feature of the document composition system 30. An administrator may mask or expose certain functions or groups of functions depending on the group profile or user profile. For example, an administrator with the configuration management feature may grant access to certain toolboxes 246 while restricting access to others.

The user interface screen 94 also has three tabs, namely a Document tab 248, a Data tab 250, and an Output tab 252, all located near the bottom of the user interface screen 94. These tabs allow users to toggle between different views of a current document. For example, Fig. 15 shows the user interface screen 94 in the document view layout with the Document tab 248 (which is the default) selected, to allow a user to develop the look and feel of a document.

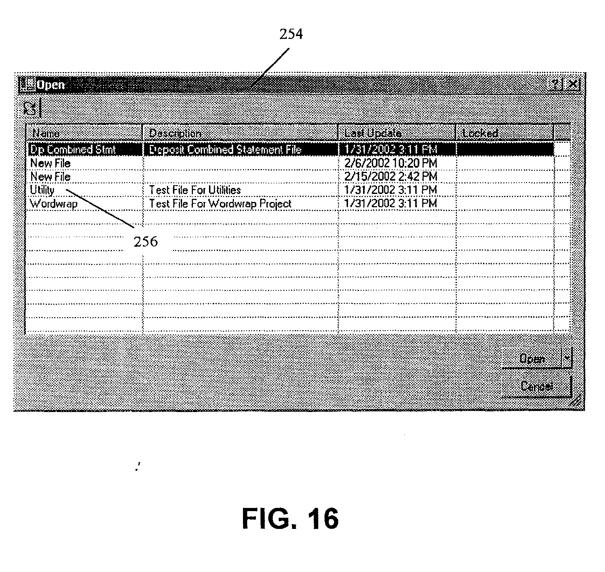

In order to add variable data fields, the end user needs to link the document to an existing hierarchical design, which contains the record structure of the data. This function is performed in the data view layout by selecting the Data tab 250. The data view layout is where new data hierarchies are defined and maintained. For example, Fig. 16 shows a screenshot of a data pop-up screen 254 as it appears when the user has selected the Data tab 250. Using the data pop-up screen 254, the user can link to an existing data design (e.g., a Utility 256).

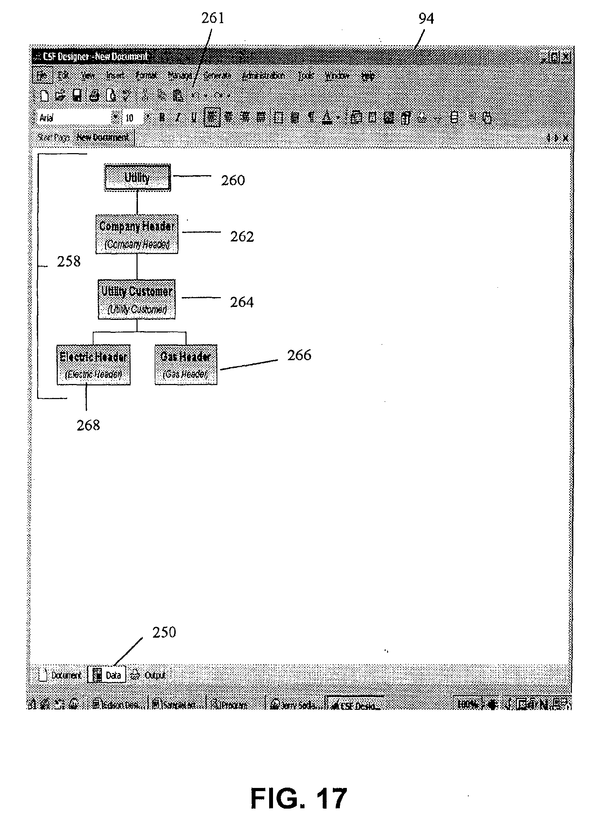

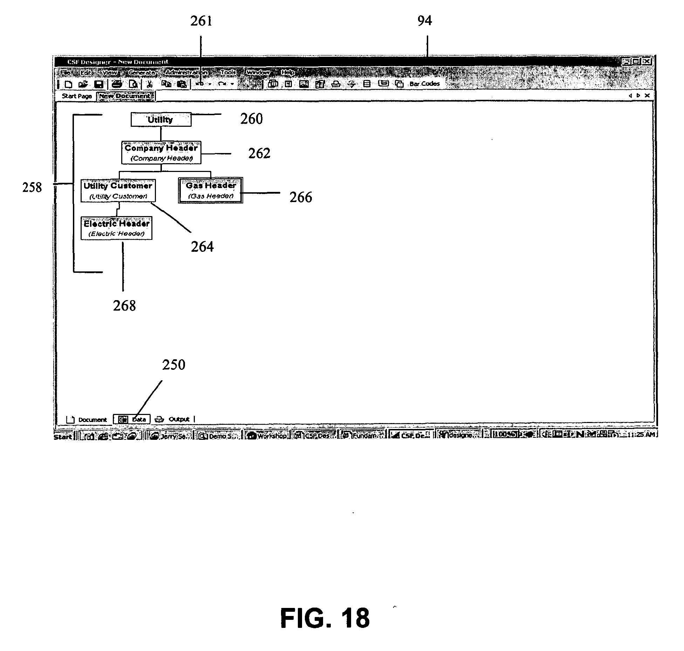

Referring to Figs. 17 and 18, which show a data view layout with a data hierarchy structure 258 selected by the Utility 256 in Fig. 16. The Data view layout shows the graphical representation of the record hierarchy of the Utility 256, consisting of a Utility record 260, a Company Header record 262, a Utility Customer record 264, an Electric Header record 268, and a Gas Header record 266.

Referring specifically to Fig. 18, the user, with permission as defined by the administrator using the configuration management component, may, for example, drag, the Gas Header record 266 to the Company Header record 262 to change the structure of data hierarchy structure 258. This functionality allows the end user to quickly test data configurations and hierarchies to be used in the document design process. In addition, the visual interpretations of data using the data hierarchy structure 258 make the data easier to understand than text descriptions. The user can also click on the Gas Header record 266 and drag it back to the Utility Customer record 262 to change the data hierarchy back to its original configuration structure. Alternatively, the user can also use an undo icon 261 to undo the step of moving the Gas Header 266.

The user could also click on and select any record to see the fields that are included in the selected record. In one embodiment, a field groups toolbox can be opened to show records that are in the database. The user then can drag and drop any record into the hierarchy to change the appearance and structure of the hierarchy structure.

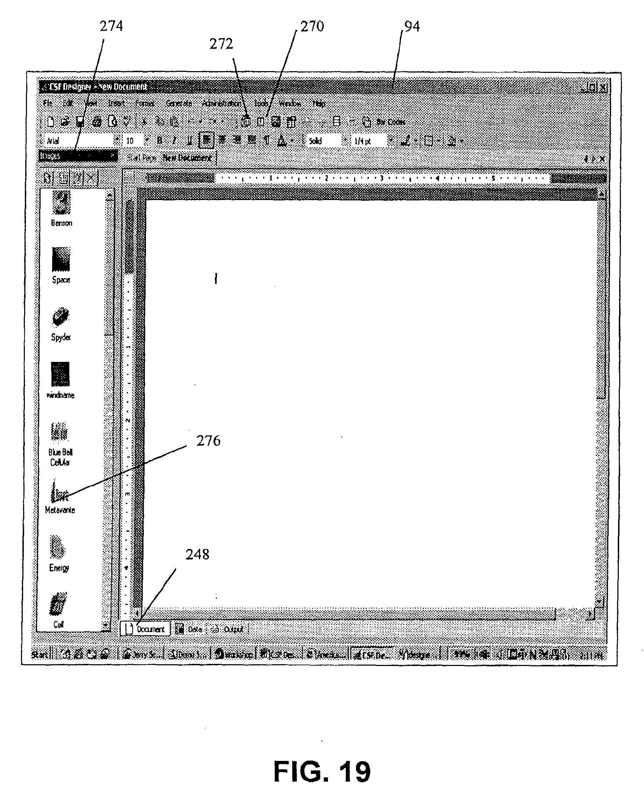

Figs. 19 through 28 are screenshots which demonstrate the creation of a letter for communication with customers or clients. These screenshots demonstrate the use of image and record toolboxes, and how to drag and drop the images and records into the letter. Figs. 19 through 28 also demonstrate the interoperability of the document composition system 30 of the present invention by its interaction with Microsoft Word. The use of variable fields and the insertion of signatures are also depicted by the screenshots.

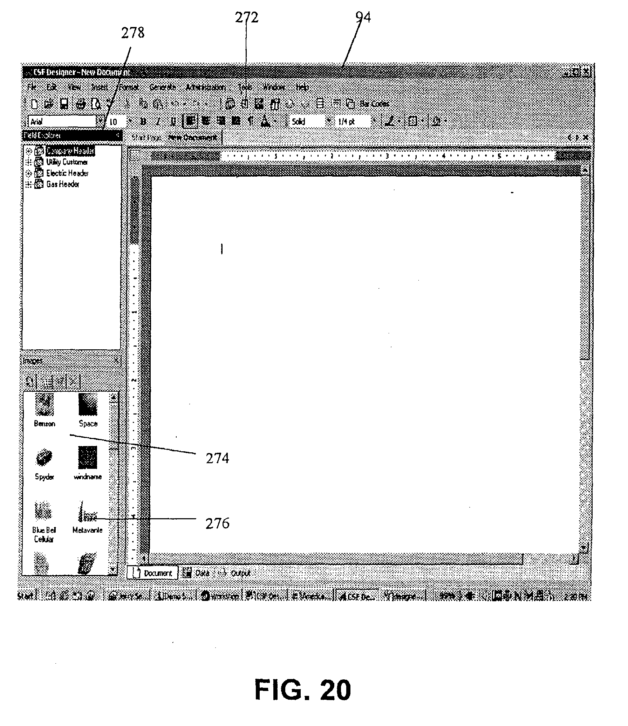

Referring first to Fig. 19, a document view layout is shown with an Images Button 270 already selected to bring up an Images Toolbox 274. The Images Toolbox 274 contains existing images, such as a Metavante image icon 276. The Images Toolbox 274 is docked on the left side of the user interface screen 94 by selecting the Images Toolbox 274 and moving it toward the left side of the user interface screen 94. This functionality gives the user the capability to define the user's interface appearance. Similarly, as shown in Fig. 20, the user may also select the Field Explorer Button 272 to bring up a Record Fields ToolBox 278 and dock the Record Fields ToolBox 278 on the left side of user interface screen 94.

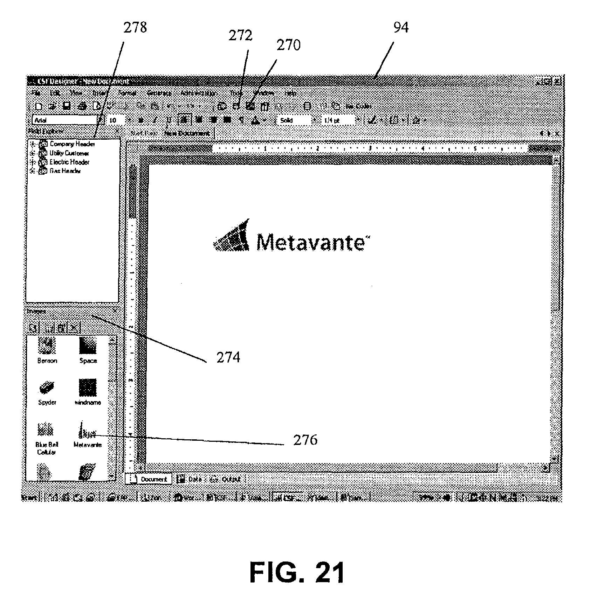

Fig. 21 is a screenshot demonstrating the drag and drop feature of the document composition system 30. Fig. 21 shows how the user can select the Metavante image icon 276 from the Images ToolBox 274 and place that Metavante image on the new document in the user interface screen 94 by dragging and dropping it from the Metavante image icon 276. The user can resize the Metavante image icon 276 without affecting the size of the original Metavante image stored in the database.

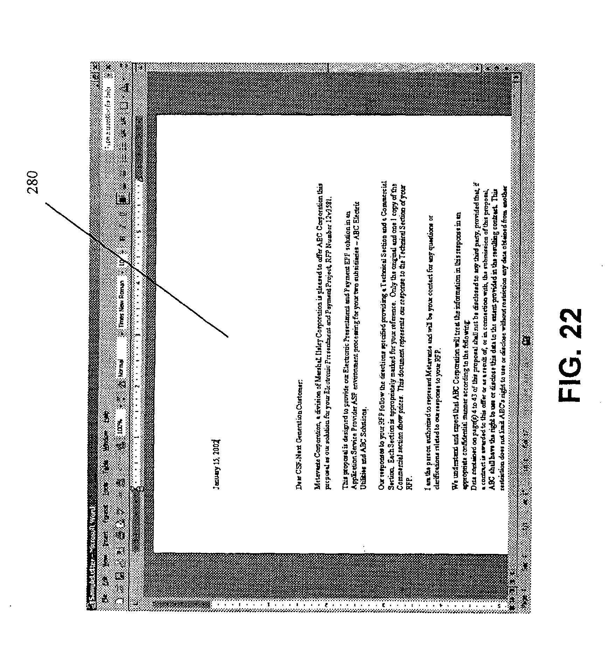

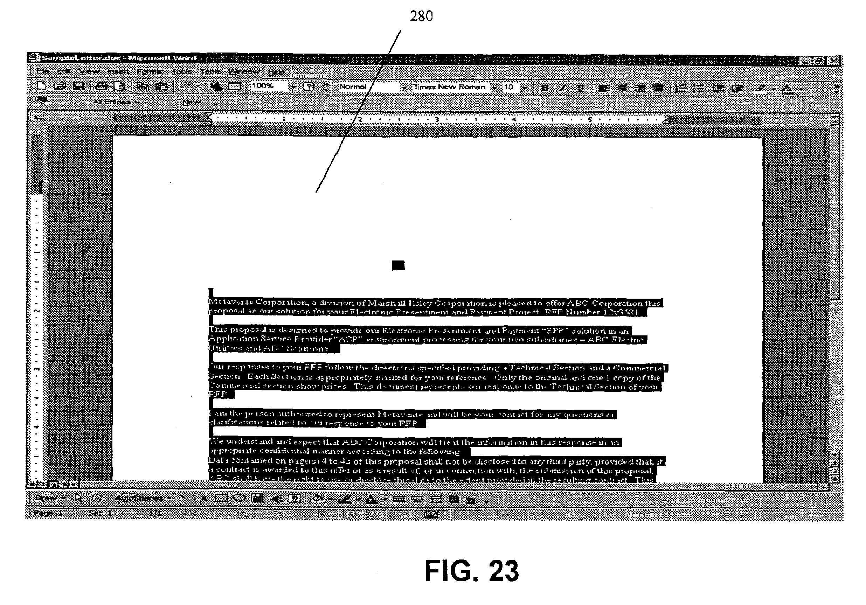

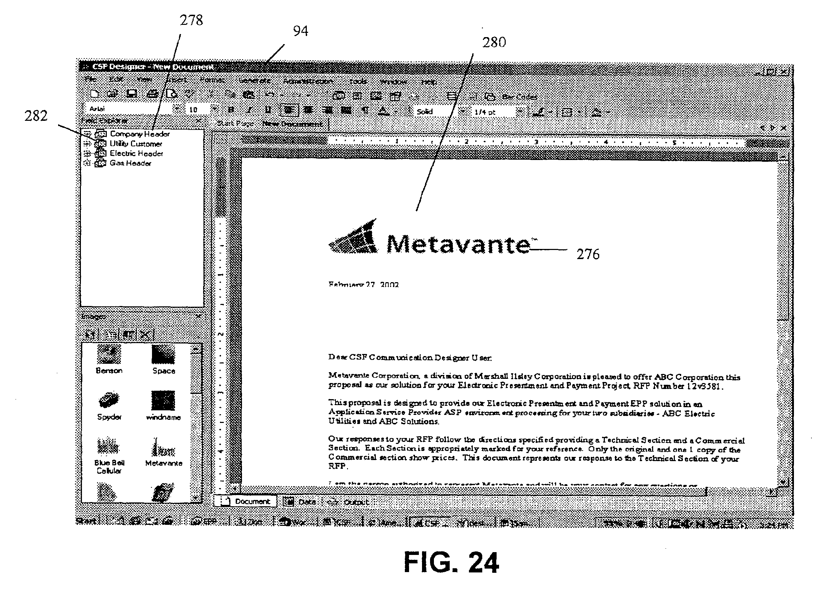

Referring now to Figs. 22 through 24, the user can copy and paste text from other applications, such as Microsoft Word, onto the user interface screen 94 (Fig. 21). Fig. 22 shows a sample of a Microsoft Word document 280. Fig. 23 shows the Word document 280 being highlighted for copying. Fig. 24 shows the copied Word document 280 pasted onto the document in the user interface screen 94. As shown in Fig. 24, the paragraphing and spacing remain intact after the Word document 280 has been pasted onto user interface screen 94. Once pasted, the user can edit the document by changing the text font using Microsoft Word-like functions.

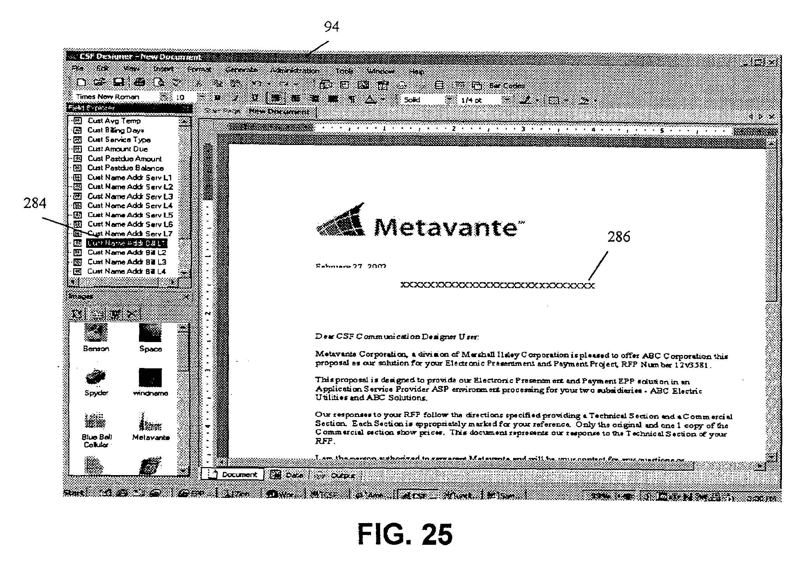

Referring next to Figs. 24 through 27, the user can insert variable data fields into the document (e.g., the name and address of a customer). To add variable data to the document, the user can select and expand a Utility Customer directory 282 found in the Field Explorer Toolbox 278. From the expanded list shown in Fig. 25, the user can select "Cust Name Addr Bill L1" 284 and drag it into the document on the user interface screen 94.

Fig. 25 shows that the "Cust Name Addr Bill L1" 284 has been added to the document of the user interface screen 94 as a variable data field 286 (all variable data fields are shown as "XXX" in the figures).

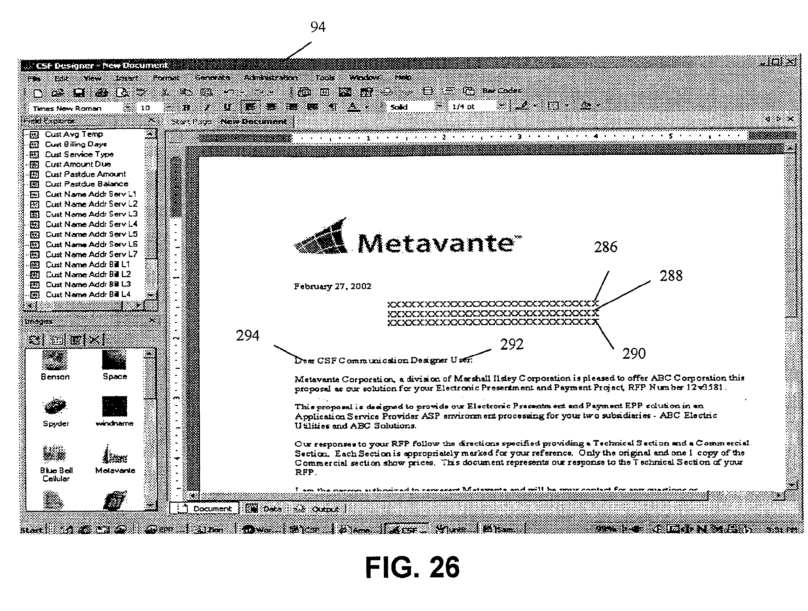

Fig. 26 shows the addition of three variable data fields, identified by reference numerals 286, 288, and 290, to the document shown on the user interface screen 94.

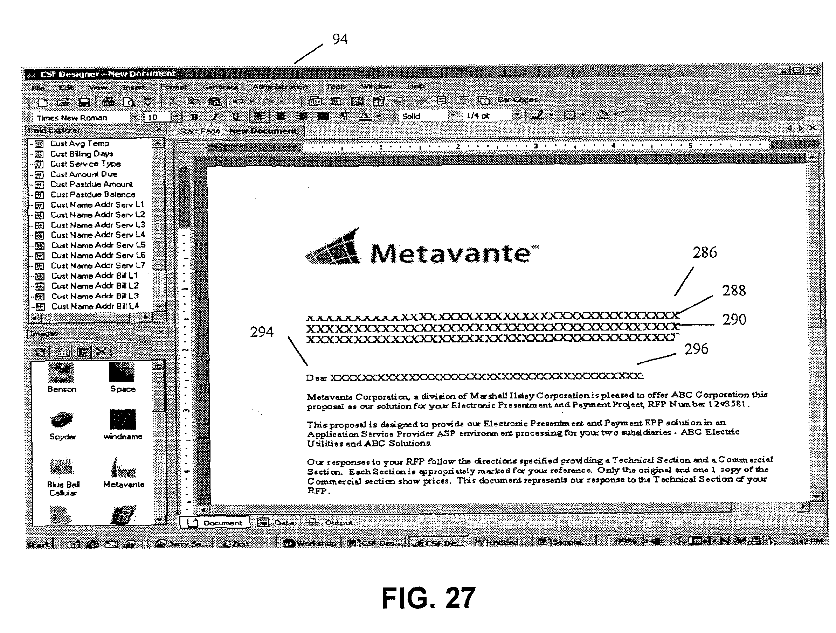

Fig. 27 shows the replacement of the "CSF Communication Designer User" 292 (Fig. 26) following the "Dear" 294 by another data field 296. The user can identify the "ID" of a field record, such as one of the variable data fields 286, 288, 290, and 296, by floating the mouse cursor over these data fields, thereby causing the identity of the data record to pop up in a pop-up hint mode balloon, as is conventional in Microsoft Office compatible software. The field inserted is not a static size, but rather may expand or shrink to the size of the data that will populate the field at run time (when the document is processed, printed, or displayed).

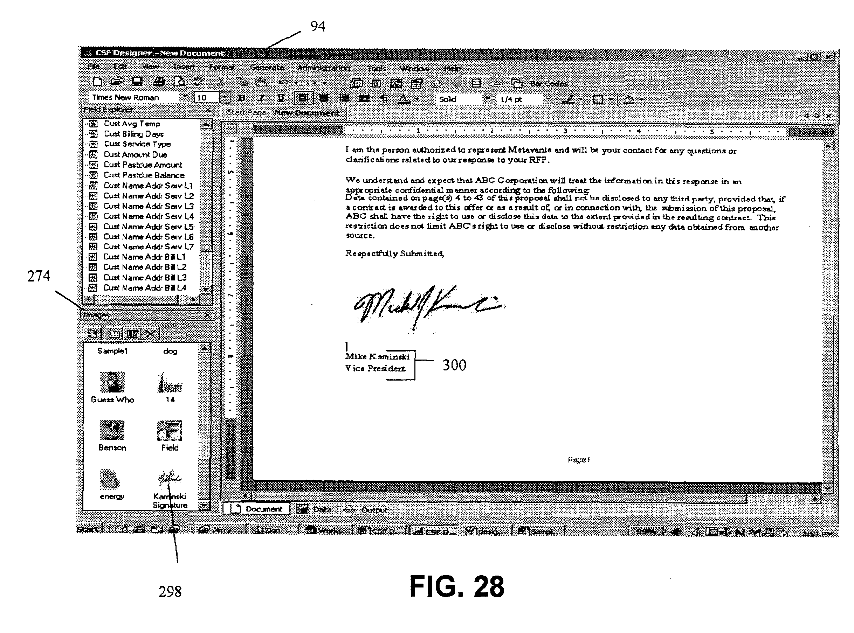

Referring now to Fig. 28, the end user can insert a signature image 298 into the document on the user interface screen 94 by selecting the desired image from the Images ToolBox 274. In one embodiment, the document composition system 30 performs smart logo insertion wherein the name 300 is automatically moved to accommodate the size of the signature image 298.

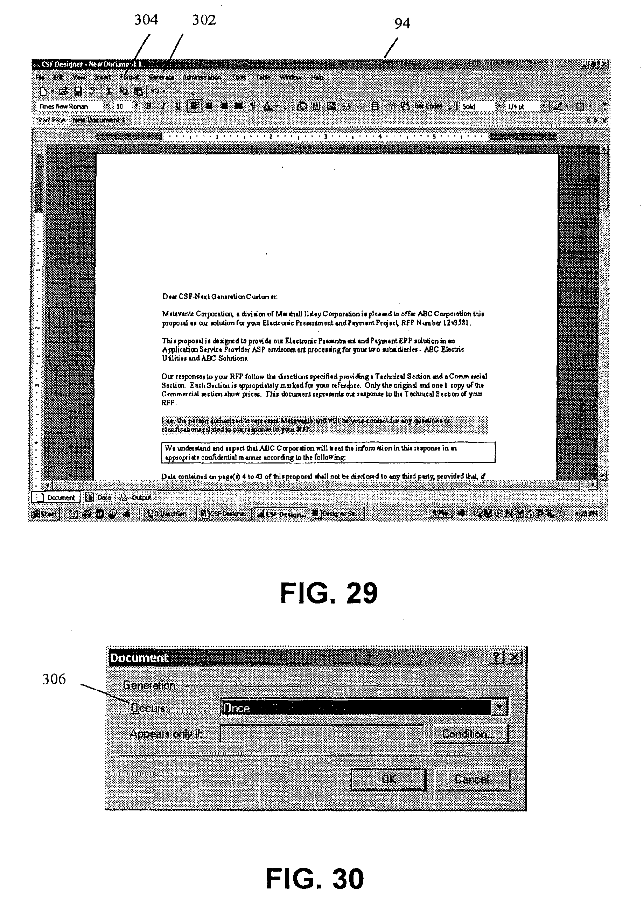

Referring next to Figs. 29 and 30, the document preview feature of the document composition system 30 is illustrated. The user may preview the document anytime during the composition stage. When doing a document preview for the first time, the end user needs to assign which record will trigger a new document. To configure the user interface screen 94 to know when to create a new document, the end user can use a Format 304 dropdown tool from the main menu and select Document from the Format 304 dropdown tool. As shown in Fig. 30, the end user may select Once from the Occurs dropdown menu 306. In this example, a new document will be created each time a new customer data record appears on the input file.

Next, the user can click on a Generate drop down menu 302 (Fig. 29) from the main menu and make a selection to populate the variable data field on the document. The user can preview the population of data onto the document by clicking on the Generate drop down menu 302.

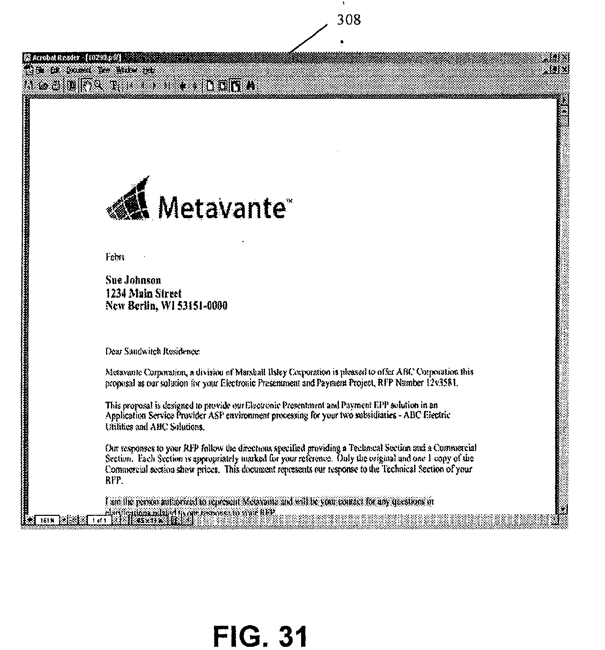

Referring now to Fig. 31, an Adobe Acrobat window 308 will launch and the PDF version of the document will appear with all the functionality that was entered into the design of the document. If there are multiple documents created from an input file (such as a bill or letter to multiple customers), then the Adobe Acrobat window 308 will show documents with the variable data changed from each document to the next.

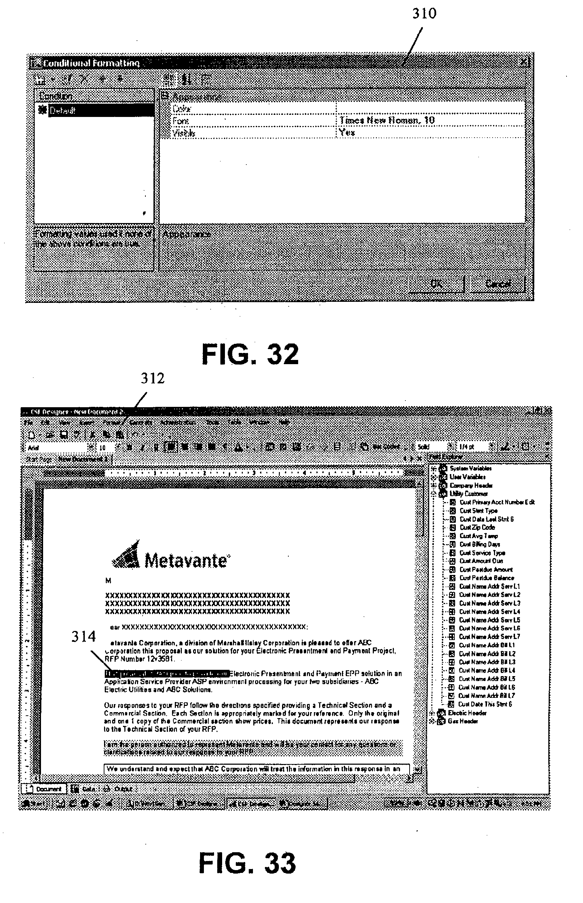

Referring now to Figs. 32 and 33, a Conditional Formatting pop-up screen 310, which can be selected under the Format menu button 312, is a tool that allow the user to apply formatting to a selected or highlighted area, and have that formatting change depending on the conditional formula for the selected area. As shown in Fig. 33, a conditioned line 314 is highlighted to indicate that there is a condition applicable to the paragraph. The logic of the Conditional Formatting may be described as: 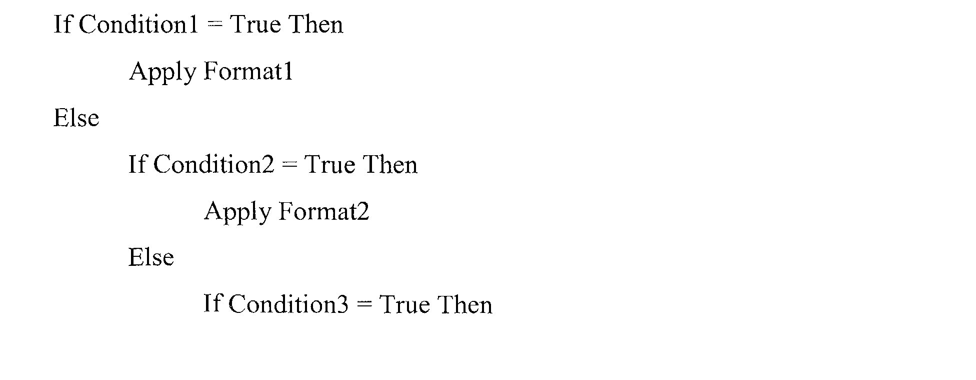 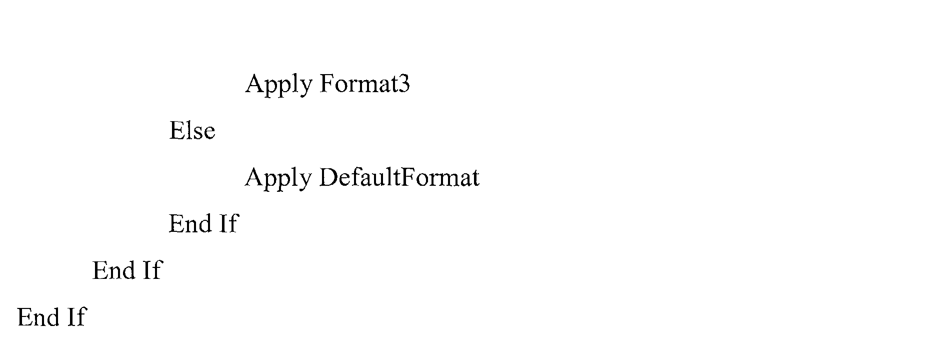 Built-in Boolean comparison operations may also be utilized. Alternately, the end user may use a custom formula to determine whether the format condition should be applied. As shown in Fig. 33, the highlighted portion indicating the existence of a condition may be underlined or its font size, colour, and/or other attributes changed to indicate that a condition has been inserted.

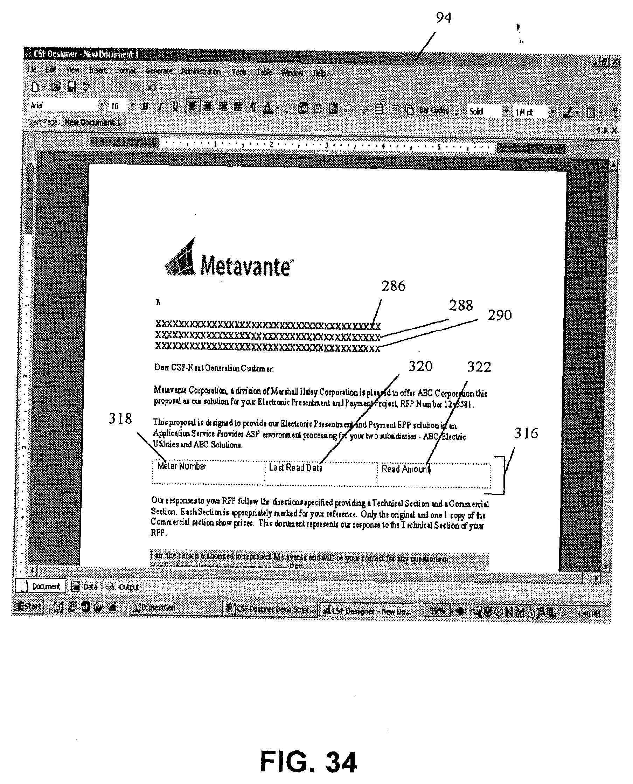

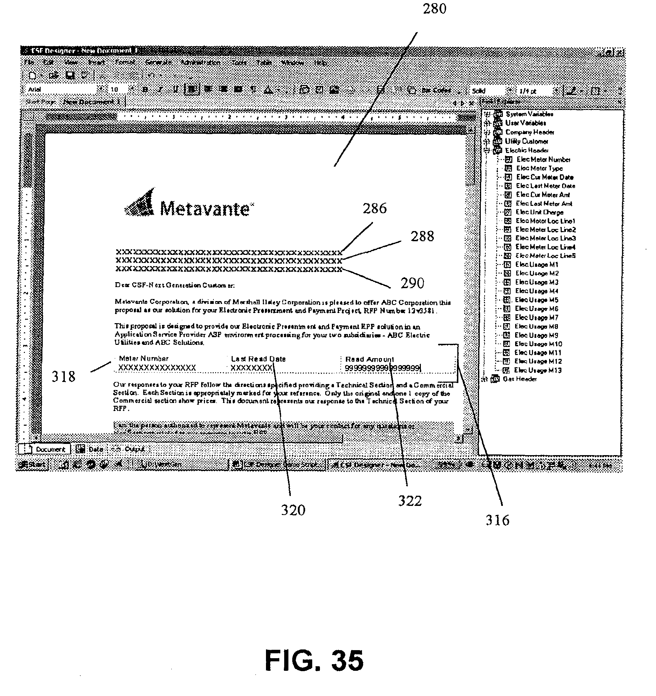

Referring now to Figs. 34 and 35, which demonstrate the merger of data from the record system 66 (Fig. 2) or the customer data file 64 (Fig. 2) into the document on the user interface screen 94. The user can also create dynamic documents by using tables. Fig. 34 shows a table 316 inserted into the document to facilitate data retrieval and organization. As shown in Fig. 35, once the table 316 has been created, the user can place variable data fields from a recurring data record into the table 316. For example, a Meter Number 318, a Last Read Date 320, and a Read Amount 322 may be used by a utility company, such as an electric company, to present bills to customer based on the meter readings.

The document 280 with variable data fields 286, 288, 290, 318, 320, and 322 may be merged with data from the record system 66 (Fig. 2) or the customer data file 64 (Fig. 2) to produce high volume output for the printer 70 (Fig. 2), the archival software 74 (Fig. 2), or the electronic delivery solution 78 (Fig. 2). The document 280 may of course be saved for later use and reuse, such as, for example, on a monthly basis to generate either paper or electronic bills to a plurality of customers.

Figs. 14 through 35 demonstrate the ease of use and quick implementation of the document composition system 30 of the present invention. Figs. 14 through 35 show that users can access advanced tools to create and maintain entire documents or individual elements of documents through a centralized relational database. As shown, customer data can be maintained centrally and used in any number of documents by any number of users to create personalized, data-driven customer communications.

It may therefore be appreciated from the above detailed description of the document composition system 30 of the present invention that it provides a tool for cross-organizational targeted document creation. The tool may be utilized by all departments within an organization to generate outbound documents. The present invention provides one product, which corporations may use to create and deliver all of their outbound customer communications (such as bills, statements, letters, notices, policies, direct mail campaigns, booklets, brochures, etc.) regardless of the end delivery point (paper, electronic, archive, etc.).

The document composition system 30 is an intuitive, user-friendly tool that can be used by corporations to create all outbound customer communications, from high volume recurring documents to customized, real time, one-off documents. These documents are created within a secure, collaborative LAN, WAN, or Web based development environment. The document composition system 30 may be used to generate documents in nightly batches of any size, or as real time one-off documents that capture the status of the data, as it exists at the moment of creation.

Although an exemplary embodiment of the present invention has been shown and described with reference to particular embodiments and applications thereof, it will be apparent to those having ordinary skill in the art that a number of changes, modifications, or alterations to the invention as described herein may be made, none of which depart from the spirit or scope of the present invention. All such changes, modifications, and alterations should therefore be seen as being within the scope of the present invention.

## Claims

1. A document composition system for creating and delivering communications, said document composition system comprising:
a graphical user interface adapted to allow a plurality of users to define design components required to create and design documents;
a centralized database adapted to store and to allow use and re-use of said design components in multiple documents, wherein said centralized database is accessible by said plurality of users to allow said plurality of users to access and share said design components to create and design documents;
a document archival database for storing documents which are created by users;
a processing engine adapted to allow the creation and delivery of communications through the acquisition and merger of data from at least one of a plurality of records systems and customer data files with documents created by users which include design components from said centralized database; and
a configuration management component adapted to control user access to functions and capabilities on said graphical user interface, wherein said configuration management component is adapted to allow a plurality of levels of permission to be assigned for exposing different sets of said functions and capabilities on said graphical user interface.

2. A document composition system as defined in Claim 1, wherein said configuration management component assigns permission by establishing one or more shells, each said shell allowing system administrators to customize the appearance of said graphical user interface,
and/or wherein the components of the document composition system utilize a platform-independent transfer mechanism to facilitate communications therebetween, wherein said transfer mechanism is Extensible Markup Language ("XML"),
and/or wherein a user may access the document composition system on a thin client workstation adapted to allow the user to access application code remotely,
and/or wherein said centralized database is arranged and configured to support a collaboration support functionality in which said plurality of users can collaborate, wherein each of said plurality of users can access, review, and collaborate on at least one of said documents which is created and designed,
and/or wherein said centralized database is arranged and configured to support a collaboration support functionality in which said plurality of users can collaborate, wherein each of said plurality of users can access, review, and collaborate on at least one of said documents which is created and designed and said collaboration support functionality enables users from a plurality of entities to maintain a support community in which design components are shared among members of said support community,
and/or wherein said configuration management component is arranged and configured to allow at least one user to access, review, and approve at least one of said created and designed communication,
and/or wherein said configuration management component monitors the activities of said plurality of users to create a layout for said graphical user interface for said plurality of users which is based on said monitored activities,
and/or wherein said graphical user interface is optimized to interface with global directory services,
and/or wherein the components of the document composition system are Internet-accessible,
and/or wherein said processing engine accesses and interrogates at least one external device to determine what resources are available, and wherein said processing engine references or embeds said resources based on the availability of said resources from said external device,
and/or wherein said processing engine is arranged and configured to create outputs for electronic document delivery,
and/or wherein said engine is arranged and configured to create outputs for electronic bill presentment and payment,
and/or further comprising: a check imaging component wherein said check imaging component scales and aggregates a plurality of check images from an image archive to create a check image statement,
and/or further comprising :a presentation layer, wherein said presentation layer includes said graphical user interface; an application layer, wherein said application layer includes rules for defining said presentation layer; and a database layer, wherein said database layer includes said centralized database,
and/or further comprising :a presentation layer, wherein said presentation layer includes said graphical user interface; an application layer, wherein said application layer includes rules for defining said presentation layer; a database layer, wherein said database layer includes said centralized database; and a user support component which is adapted to control access to said presentation layer and said application layer.

3. A document composition system for creating and delivering communications, said document composition system comprising:
a graphical user interface adapted to allow a plurality of users to define design components required to create and design documents for communications;
a centralized database adapted to store and to allow use and re-use of said design components in multiple documents, wherein said centralized database is accessible by a plurality of users to allow said plurality of users to access and share said design components to create and design documents;
a processing engine adapted to allow the creation and delivery of communications through the acquisition and merger of data from at least one of a plurality of records systems and customer data files with documents created by users which include design components from said centralized database; and
a platform-independent transfer mechanism to facilitate communications between the components of the document composition system, including Extensible Markup Language ("XML").

4. A document composition system as defined in Claim 3, further comprising: a configuration management component adapted to control user access to functions and capabilities on said graphical user interface by allowing a plurality of levels of permission to be assigned for exposing different sets of said functions and capabilities on said graphical user,
and/or wherein said centralized database is arranged and configured to support a collaboration support functionality in which said plurality of users can access, review, and collaborate on at least one of said documents which is created and designed,
and/or wherein said centralized database is arranged and configured to allow at least one user to access, review, and approve at least one of said created and designed document for communications,
and/or wherein said centralized database is arranged and configured to track the activities of said plurality of users to create a layout for said graphical user interface for said plurality of users which is based on said tracked activities,
and/or wherein a user may access the document composition system on a thin client workstation adapted to allow the user to access application code remotely, and/or wherein the components of the document composition system are Internet-accessible,
and/or wherein said processing engine accesses and interrogates at least one external device to determine what resources are available, and wherein said processing engine references or embeds said resources based on the availability of said resources from said external device,
and/or wherein said processing engine is arranged and configured to create outputs for electronic document delivery,
and/or wherein said processing engine is arranged and configured to create outputs for electronic bill presentment and payment,
and/or further comprising: a presentation layer, wherein said presentation layer includes said graphical user interface; an application layer, wherein said application layer includes rules for defining said presentation layer, and wherein said application layer references or maps data from said plurality of records systems; and a database layer, wherein said database layer includes said centralized database,
and/or further comprising: a presentation layer, wherein said presentation layer includes said graphical user interface; an application layer, wherein said application layer includes rules for defining said presentation layer, and wherein said application layer references or maps data from said plurality of records systems; a database layer, wherein said database layer includes said centralized database; and a user support component which is adapted to control access to said presentation layer and said application layer.

5. A multi-layered document composition system, comprising:
a presentation layer, wherein said presentation layer comprises a graphical user interface adapted to allow a plurality of users to define design components required to create and design documents for communications;
a database layer, wherein said database layer comprises a centralized database adapted to store and to allow use and re-use of said design components in multiple documents, wherein said centralized database is accessible by said plurality of users to allow said plurality of users to access and share said design components to create and design documents;
an application layer, wherein said application layer comprises rules for defining said presentation layer, said application layer being optimized to map data from a plurality of records systems and customer data files with documents created by users which include design components from said centralized database; and
a user support component is arranged and configured to selectively grant access to all or portions of said presentation layer and said application layer.

6. A multi-layered document composition system as defined in Claim 5, wherein said user support component is further arranged and configured to selectively grant access to all or part of said database layer,
and/or wherein said application layer comprises a specification sub-layer and an implementation sub-layer,
and/or wherein said specification sub-layer contains the rules for the application layer and the implementation sub-layer,
and/or wherein said database layer is optimized to interface with global directory services,
and/or further comprising: a configuration management component adapted to control user access to functions and capabilities on said graphical user interface, wherein said configuration management component is adapted to allow a plurality of levels of permission to be assigned for exposing different sets of said functions and capabilities on said graphical user interface,
and/or wherein said centralized database is arranged and configured to support a collaboration support functionality in which said plurality of users can access, review, and collaborate on at least one of said documents which is created and designed,
and/or wherein said configuration management component is arranged and configured to allow at least one user to access, review, and approve at least one of said created and designed documents,
and/or wherein a user may access the document composition system on a thin client workstation adapted to allow the one user to access application code remotely,
and/or wherein the components of the document composition system utilize a platform-independent transfer mechanism to facilitate communications therebetween, wherein said transfer mechanism is Extensible Markup Language ("XML"),
and/or further comprising: a processing engine adapted to allow the creation and delivery of communications through the acquisition and merger of data from at least one of a plurality of records systems and customer data files with documents created by users,
and/or wherein said processing engine accesses and interrogates at least one external device to determine what resources are available, and wherein said processing engine references or embeds said resources based on the availability of said resources from said external device.

7. A method for composing documents, comprising the steps of:
defining design components required to create and design documents via a graphical user interface;
storing said design components in a centralized database, wherein said centralized database is accessible by a plurality of users to allow said plurality of users to access and share said design components to create and design documents;
storing documents which are created by users;
acquiring and merging data with said documents from at least one of a plurality of records systems and customer data files with documents created by users;
establishing a universal format for structured documents and data, wherein said universal format is extensible and platform-independent; and
storing application code at an application server to provide thin client access for accessing said application code remotely.

8. A method for composing documents as defined in Claim 7, further comprising:
configuring access to functions and capabilities on said graphical user interface based on a user profile,
and/or further comprising:
providing collaboration support in which a plurality of users can access, review, and collaborate on at least one of said documents,
and/or further comprising:
allowing at least one user to access, review, and approve at least one of said documents
and/or further comprising:
tracking the activities of at least a subset of said plurality of users to create a layout for said graphical user interface for said subset of said plurality of users based on said tracked activities,
and/or further comprising:
providing Internet access to said graphical user interface for at least some of said plurality of users,
and/or further comprising:
accessing and interrogating at least one external device to determine what resources are available, and referencing or embedding said resources based on the availability of said resources from said external device,
and/or. further comprising:
producing merged document outputs for electronic document delivery,
and/or further comprising:
producing merged document outputs for electronic bill presentment and payment.

9. A method for composing documents, comprising the steps of:
defining design components required to create and design documents via a graphical user interface;
storing said design components in a centralized database, wherein said centralized database enables a plurality of users to access and share said design components to create and design documents;
acquiring and merging data with said documents from a plurality of systems of records to thereby create merged documents;
establishing a universal format for structured documents and data, wherein said universal format is extensible and platform-independent;
generating a plurality of check images, including extracting a sequence key from at least one of said records systems and generating a sequence key file;
retrieving at least one image based on said sequence key file; and
aggregating said sequence key file with said retrieve image; and creating a statement with a plurality of check images.

10. A method for composing documents as defined in Claim 9, said method further comprising:
storing application code at an application server to provide thin client access of accessing said application code remotely,
and/or further comprising:
configuring access to functions and capabilities on said graphical user interface,
and/or further comprising:
providing collaboration support in which a plurality of users can access, review, and collaborate on at least one of said documents,
and/or further comprising:
allowing at least one user to access, review, and approve at least one of said documents,
and/or further comprising:
tracking the activities of said plurality of users to create a layout for said graphical user interface for said plurality of users based on said tracked activities.
and/or further comprising:
providing Internet to said graphical user interface for at least some of said plurality of users,
and/or further comprising:
accessing and interrogating at least one external device to determine what resources are available, and referencing or embedding said resources based on the availability of said resources from said external device,
and/or further comprising:
producing merged document outputs for electronic document delivery,
and/or further comprising:
producing merged document outputs for electronic bill presentment and payment.
